(19) Europäisches Patentamt

European Patent Office

Office européen des brevets

(11) Veröffentlichungsnummer: **0 246 406 B1**

(12) **EUROPÄISCHE PATENTSCHRIFT**

(45) Veröffentlichungstag der Patentschrift: **18.05.94**

(51) Int. Cl.5: **C09C 1/02**

(21) Anmeldenummer: **87103460.9**

(22) Anmeldetag: **10.03.87**

(54) **Carbonathaltige mineralische Füllstoffe, Pigmente und ähnliche Materialien.**

(30) Priorität: **22.05.86 DE 3617169**

(43) Veröffentlichungstag der Anmeldung:
**25.11.87 Patentblatt 87/48**

(45) Bekanntmachung des Hinweises auf die
Patenterteilung:
**18.05.94 Patentblatt 94/20**

(84) Benannte Vertragsstaaten:
**AT BE CH DE ES FR GB IT LI NL SE**

(56) Entgegenhaltungen:
**EP-A- 0 027 997**
**FR-A- 2 440 436**
**GB-A- 2 139 606**
**US-A- 3 512 722**

(73) Patentinhaber: **Plüss-Staufer AG**

**CH-4665 Oftringen(CH)**

(72) Erfinder: **Strauch, Dieter**
**Kanalweg 24**
**CH-4800 Zofingen(CH)**
Erfinder: **Belger, Peter**
**Juraweg 4**
**CH-4812 Mühlethal(CH)**
Erfinder: **Hofer, Heiner**
**Untersteckholzstrasse 44**
**CH-4900 Langenthal(CH)**
Erfinder: **Merz, Martin**
**Rosenweg 5**
**CH-4455 Zunzgen(CH)**

(74) Vertreter: **Reinhard, Skuhra, Weise**
**Postfach 44 01 51**
**D-80750 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die vorliegende Erfindung betrifft carbonathaltige mineralische Füllstoffe, Pigmente und ähnliche Materialien.

Unter Füllstoffen versteht man meist relativ billige Stoffe, die man z.B. Werkstoffen, Kleb- und Anstrichstoffen, Papier, Kunststoffen und dergleichen beimischt, um deren Volumen und/oder Gewicht zu erhöhen, aber auch oft, um die technische Verwendbarkeit zu verbessern. Auch bei Kautschuk und synthetischen Elastomeren kann man durch geeignete Zusätze (hier oft Verstärker genannt) die Qualität verbessern, so z.B. die Härte, Festigkeit, Elastizität und Dehnung.

Pigmente sind im Anwendungsmedium praktisch unlösliche, anorganische oder organische, bunte oder nichtbunte Farbmittel. Viele anorganische Pigmente fungieren auch als Füllstoffe und umgekehrt. Die Pigmente werden insbesondere verwendet zum Färben von Lacken und Anstrichmitteln, für die Einfärbung von Kunststoffen, Papier, Textilien, Zement, Beton, Keramik, Glas und Emaille, Kosmetika, Lebensmitteln sowie für Druckfarben in der graphischen Industrie und als Künstlerfarben.

Insbesondere in der Papier-, Farben- und Lack-Industrie werden Produkte gefordert, die einen hohen Glanz und eine hohe Opazität aufweisen. Die DE-PS 27 33 722 betrifft ein Verfahren zur kontinuierlichen Herstellung von Calciumsulfoaluminat-Pigment mit einer Teilchengröße von 0,1 bis 2,0 $\mu$m durch Umsetzung von Calciumhydroxid mit Aluminiumsulfat zur Papierbeschichtung. Dieses Verfahren bewirkt in Druckpapieren u.a. einen hohen Glanz selbst bei mäßigen Kalanderbedingungen aufgrund des hohen Hydratationsgrads von Satinweiß, wobei Papier mit hoher Opazität durch Ausbildung einer dicken Überzugsschicht erhalten wird. Die DE-PS 1 938 162 betrifft ein Verfahren zum Beschichten von Papier oder dergleichen, wobei ein Beschichtungsmaterial aus einer in einem flüssigen Medium enthaltenen polymeren Zusammensetzung auf eine Bahn aufgetragen wird. Mit diesem Verfahren soll die direkte Herstellung einer leichten Beschichtung hoher Glätte und Opazität ermöglicht werden, ohne daß anschließende Glättungsarbeiten erforderlich sind.

Die DE-AS 20 26 963 betrifft ein Verfahren zur Herstellung eines Papiers auf Basis natürlicher und/oder synthetischer Fasern oder einer Folie aus synthetischem Material, insbesondere eines Reproduktionspapiers. Bei diesem Verfahren wird als Weißpigment ein in stark saurem Medium schwach polymerisierter Methylenharnstoff-Niederschlag in den Faserbrei eingearbeitet oder auf die Oberfläche aufgestrichen. Damit soll eine Verbesserung des Weißgrades und eine Verbesserung der Opazität des Papiers erreicht werden.

Eine weitere wichtige Eigenschaft im Zusammenhang von Papieren ist der Retentionswert. Der Retentionswert zeigt an, wieviel von dem in den z.B. Papierstoff gemischten Füllstoff im Fertigprodukt zurückbleibt. Dies sei am Beispiel der Papierherstellung näher erläutert:
Unter Füllstoffen werden Materialien verstanden, die dem Papierstoff zugeführt zur Anwendung gelangen.

Seit langem bekannt in der Papierproduktion ist, daß die teuren und verhältnismäßig schwer anschaffbaren Faserstoffe durch Füllstoffe mineralischen Ursprungs ersetzt werden. Der Füllstoffgehalt der verschiedenen Papiersorten liegt zwischen 10 und 30 %. Ein weiterer Vorteil der Verwendung von Füllstoffen in der Papierproduktion besteht unter anderem darin, daß die fein verteilten Füllstoffe die Räume zwischen den einzelnen Fasern ausfüllen und dadurch die Papieroberfläche ebener und glatter gestalten und die Transparenz des Papiers vermindern, was als eine grundlegende Anforderung bei den Druck- und Schreibpapiersorten gilt. Eine nachteilige Erscheinung besteht hingegen darin, daß durch Erhöhung der Füllstoffmenge der Leimgehalt des Papiers zurückgeht bzw. zum Erreichen des gleichen Leimgehalts mehr Harz erforderlich wird, weiterhin, daß auch die Zerreißlänge des Papiers abnimmt.

Die Füllstoffe pflegt man aufgrund ihrer chemischen Zusammensetzung in Silikate, Sulfate, Carbonate und Oxide aufzuteilen. In der Papierindustrie gelangt am meisten verbreitet das in die Gruppe der Silikate gehörende Kaolin zum Einsatz. Die Hauptursache der Verbreitung des Kaolins ist in seiner verhältnismäßig preisgünstigen Beschaffenheit und in seiner etwa 60-70%igen Retention zu suchen. Der Retentionswert zeigt an, wieviel von dem in den Papierstoff gemischten Füllstoff im Fertigprodukt zurückbleibt.

Dem Einsatz der in die Gruppe der Carbonate gehörenden Kreide setzt trotz ihrer in technologischer Hinsicht günstigen Eigenschaften die im Vergleich zu Kaolin etwa 50-55%ige Retention die Grenzen. Die als Füllstoff verwendete Kreide wird aus den Überresten der in der Natur häufig vorkommenden, hauptsächlich mikroskopische Feinheit aufweisenden Stützgerüsten von Microorganismen, sogenannten Nannofossilien durch Schlämmen hergestellt. Durch Ausfällen aus Calciumchloridlösung mittels Soda bzw. aus Calciumhydroxidlösung durch Kohlendioxid erhält man das sogenannte präzipitierte oder ausgefällte Calciumcarbonat.

Abgesehen von seiner ziemlich schlechten Retention weist das natürliche bzw. ausgefällte Calciumcarbonat als weiteren technologischen Nachteil die Eigenschaft auf, daß es gegen das zum Ausfällen der Leimstoffe verwendete Aluminiumphosphatsulfat sehr empfindlich ist.

Der DE-PS 27 37 742 liegt die Aufgabe zugrunde, die Nebenprodukte in der Papierindustrie als Füllstoff zu nutzen. Die Lösung dieser Aufgabe besteht in der Verwendung des beim Kaustifizieren von Sulfatablauge der Cellulosefabrikation anfallenden Calciumcarbonats als Füllstoff für die Papierherstellung, wobei das Calciumcarbonat als maximal 75%ige wäßrige Suspension in Form des anfallenden Kalkschlamms und nach Einstellung seines pH-Wertes zwischen 5 und 12 mit einer Säure oder einem Säuregemisch eingesetzt wird.

Weitere, die Retention betreffende Druckschriften sind die DE-PS 25 51 259 und die DE-AS 1 546 240.

Retentionsmittel werden auch als Flockungsmittel bezeichnet. In der Papiermasse im Holländer oder Bütte sind Faserstoffe und Füllstoffe miteinander vermischt. Es ist das Ziel, beide Stoffe als homogene Masse möglichst ohne Verluste durch Absinken in der Flotte oder Ausschwemmungen in den vorgegebenen Mengenverhältnissen auf das Sieb der Papiermaschine zu bringen. Dabei verhalten sich Füllstoffe und Faserstoffe in der Dispergierbarkeit aber recht verschieden, so daß im Abwasser noch Füllstoffe auftreten können. Ein Maß für dieses Verhalten ist die "Gesamtretention", das Verhältnis in Prozenten der Füllstoffmenge im fertigen Papier zu der Menge Füllstoff (atro), die insgesamt zugesetzt wurde (einschließlich der im Rückwasser = Weißwasser enthaltenen Füllstoffe). Eine möglichst hohe Retention (Rückhaltevermögen) wird angestrebt, wobei bei der physikalisch komplizierten kolloidalen Struktur des Systems Faserstoff/Füllstoffe/Wasser eine Vielzahl von Faktoren vorliegen, aber aus den praktischen Gegebenheiten nicht alle variiert werden können.

Eine weitere wichtige Eigenschaft im Zusammenhang mit der Verwendung von Füllstoffen, Pigmenten und ähnlichen Materialien in Farben und Lacken, Papieren und Kunststoffen ist die Abrasivität.

Nach DIN 50320 ist unter dem Begriff "Verschleiß" eine "unerwünschte Veränderung der Oberfläche von Gebrauchsgegenständen durch Lostrennen kleiner Teilchen infolge mechanischer Ursachen" zu verstehen. Im deutschen Sprachgebrauch ist das aus dem Angelsächsischen entlehnte Wort "Abrasion" dem Verschleißbegriff annähernd bedeutungsgleich. Abweichend von DIN 50320 faßt man in der Fachliteratur unter Verschleiß mitunter die Wirkung mechanischer, chemischer und thermischer Komponenten zusammen (vgl. Begriff "Korrosion").

In der Papierindustrie liegen Füllstoffe zusammen mit den Faser- und Hilfsstoffen in Wasser suspendiert vor. Sie kommen in Berührung mit rotierenden und feststehenden Teilen oder gelangen zwischen sich relativ zueinander bewegende Oberflächen von Maschinenelementen, z.B. Saugerbelag und Papiermaschinensieb. In diesen Fällen bewirken sie eine Oberflächenbeschädigung der Maschinenteile. Suspendierte Pigmente als Bestandteile von Streichfarben verhalten sich gleichartig.

Zur Ermittlung zahlenmäßiger Angaben über die Verschleißwirkung von Füllstoffen in wäßriger Suspension wurden Laborprüfverfahren entwickelt, z.B. mittels des Einlehner Abrasionstester AT 1000.

Im nordamerikanischen und skandinavischen Raum wird für den gleichen Zweck der Valley-Tester mit gerätespezifischen Prüfvorschriften eingesetzt.

Da die den Verschleiß bestimmenden Einzelphänomene verfahrens- und geräteabhängig sind, muß mit den Meßergebnissen auch das benutzte Meßverfahren angegeben werden (A. Breunig und W.F. Hill, Verein Zellcheming, Berliner Allee 56, D-6100 Darmstadt, Merkblatt V/27.5/75, ausgegeben am 23. Oktober 1975).

Eine weitere wichtige Forderung ist eine möglichst gute Haftung zwischen Teilchen und Beschichtungsmittel, um bessere mechanische Eigenschaften des Endprodukts zu erhalten (David L. Skinner und Edward L. Moon, 27th Annual Technical Conference, 1972, Section 15-F, Seite 1 bis 4).

Bekannterweise werden besonders feinteilige mineralische Füllstoffe heute nach dem Stande der Technik durch Naßvermahlung und anschließende Trocknung hergestellt. Die erhaltenen Produkte werden insbesondere in der Farben- und Lack-, der Kunststoff- und in der Papierindustrie eingesetzt. Üblicherweise werden bei der Naßvermahlung organische Dispergiermittel, wie z.B. Polyacrylate, zugesetzt. Derart hergestellte Produkte enthalten nach der Trocknung sehr viele Agglomerate und zeichnen sich durch eine schlechte Dispergierbarkeit aus.

Eine der wichtigsten Eigenschaften von feinteiligen Füllstoffen, Pigmenten und ähnlichen Materialien ist jedoch deren Dispergierbarkeit, z.B. in Kunststoffen, wie PVC, Polycarbonat, Polystyrol, Polyäthylen, sowie in Lackkunstharzbindemitteln, Weichmachern, Papieren etc. Dabei soll eine möglichst feine Verteilung des Füllstoffs oder des Pigments in einem anderen Stoff z.B. in den vorstehend erwähnten Kunststoffen, Lacken, Papieren etc. erreicht werden. Die zum Dispergieren geeigneten Verfahren sind Mahlverfahren oder auch Geräte, die auf dem Ultraschall-Prinzip basieren. Im allgemeinen verwendet man zusätzlich Dispergiermittel. Dispergiermittel sind organische oder anorganische, monomere oder polymere Substanzen, die das Dispergieren von Teilchen in einem Dispersionsmittel erleichtern, indem sie die Grenzflächenspannung zwischen den beiden Komponenten erniedrigen, also Benetzung herbeiführen.

Dispergiermittel sind Substanzen mit der Eigenschaft, Agglomerationen oder Zusammenballungen der Teilchen von Pigmenten, Füllstoffen, Harzen zu verhindern und diese in eine feine Verteilung zu bringen, oder auch schon im voraus einer Tendenz zu einer Zusammenballung oder gar Fällung entgegenzuwirken. Sie haben oberflächenaktive Eigenschaften und werden verwendet beim Vorbereiten (Anreiben) von Füllstoffen und Farbstoffpigmenten für Streichmassen; zum besseren Verteilen von harzfreien Zellstoffen. Es sind zu nennen Natriumhexametaphosphat, Natriumpyrophosphat, Alkylphenol-Polyglykoläther, Alkyl-Aryl-Sulfosaure Salze. Ihre Verwendung ist auf geringste Konzentrationen zu beschränken.

Aus der DE-AS 20 01 381 sind bereits leicht dispergierbare anorganische Pigmente bekannt, deren Oberflächen nicht trocknende, fettsäuremodifizierte Alkydharze auf der Basis von Polycarbonsäuren, Polyolen und Fettsäuren mit mehr als 6 C-Atomen tragen.

Aus der DE-OS 24 56 463 ist ein Verfahren zur Herstellung feinteiliger Calciumcarbonat-Dispersionen durch Homogenisieren von gefälltem Calciumcarbonat in Gegenwart eines Dispergiermittels zu einer 15 - 25 % Wasser enthaltenden Suspension und anschließendes Naßvermahlen der Suspension bekannt, bei welchem zwecks Erzeugung von gut dispergierbarem Calciumcarbonat hoher Feinheit und Dichte die Dispersion durch Trocknen in ein rieselfähiges Produkt überführt wird.

Die DE-PS 29 08 699 beschreibt ein Verfahren zur Herstellung von Pulverpigmenten mit verbesserten Dispergiereigenschaften, bei welchem man die Pigmente in an sich bekannter Weise in einen Trockner führt, die oberflächenaktiven Mittel direkt in die Beschickungszone dieses Trockners, die von der eigentlichen Trocknungszone abgetrennt ist, einbringt und auf den wässrigen Pigmentteig gibt, worauf das gecoatete Pigment in der Trocknungszone des Trockners getrocknet wird.

Aus der DE-AS 29 21 238 ist ein Verfahren zur Herstellung von leicht dispergierbaren Pigmentpräparationen mit einem Pigmentgehalt von über 65 Gew.% bekannt, bei dem man das Pigment in Wasser aufschlämmt und bei welchem ein Salz einer organischen Säure verwendet wird. Dieses Verfahren ist dadurch gekennzeichnet, daß man als Salz der organischen Säure ein Octoat verwendet.

Schließlich ist aus der DE-PS 23 46 269 ein Verfahren zur Herstellung hochkonzentrierter feinteiliger Calciumcarbonat-Dispersionen bekannt, bei welchem das durch Umsetzen einer wäßrigen Calciumsalzlösung mit einem CaO-Gehalt von 7 bis 14 Gew.% mit einer wäßrigen Alkalicarbonat-Lösung, die 150 bis 250 g/l $CO_2$ als Carbonat und 5 bis 10 g/l $CO_2$ als Bicarbonat enthält, erhaltene Calciumcarbonat zunächst zu einer 15 bis 25 Gew.% Wasser enthaltenden Suspension homogenisiert und diese nach einer eventuell weiteren Verdünnung auf höchstens 40 Gewichtsprozent Wasser einer Naßvermahlung unterworfen wird. Mit diesem Verfahren sollen hochkonzentrierte feinteilige Calciumcarbonat-Dispersionen mit $CaCO_3$-Korngrößen von kleiner 5 μm, die bis zu 80 Gew.% Calciumcarbonat enthalten, hergestellt werden.

Feinteilige Calciumcarbonate werden heute allgemein durch Naßvermahlung hergestellt und für den Einsatz in der Farben- und Lackindustrie sowie der Kunststoffindustrie und teilweise sogar für den Einsatz in der Papierindustrie getrocknet. Bei dieser Trocknung bilden sich Agglomerate, die die Dispergierbarkeit deutlich herabsetzen. Mithin liegt es auf der Hand, auf eine Trockenvermahlung auszuweichen, bei der der Nachteil der Agglomeratbildung durch den Trocknungsvorgang nicht besteht. Derartige Trockenvermahlungen sind auch bereits bekannt (z.B. aus der US-PS 3 022 185).

Diese Verfahren führen erwartungsgemäß tatsächlich auch zu Produkten, die eine bessere Dispergierbarkeit haben als diejenigen Produkte, die durch Naßvermahlung und anschließende Trocknung erzeugt wurden. Dabei muß allerdings berücksichtigt werden, daß man bei der bekannten Trockenvermahlung im Vergleich zur bekannten Naßvermahlung stets Produkte mit gröberer Kornverteilung erhält, die aufgrund der größeren Partikel auch automatisch eine schlechtere Dispergierbarkeit aufweisen, so daß insgesamt gesehen die Dispergierbarkeit der Produkte, die gemäß dem Trockenverfahren hergestellt werden nur unwesentlich besser ist, als die Dispergierbarkeit der Partikel, die mit der Naßvermahlung und der anschließenden Trocknung hergestellt werden.

In einem Prospekt der English China Clays Paper Division, English China Clays Sales Co. Ltd., John Keay House, St. Austell, Cornwall, England (ohne Datum) mit dem Titel "English China Clays Products for the paper industry"; Calciumcarbonates" sind zwei Calciumcarbonat-Produkte mit der Bezeichnung "NP100E" und NP100P" beschrieben und eine Korngrößenverteilung graphisch angegeben. Aus dieser kann ein mittlerer Teilchendurchmesser von 0,85 μm und ein Anteil von 60 Gew.% an Teilchen im Bereich von 0,5 bis 1,8 μm Teilchendurchmesser abgelesen werden. Angaben über einen Steilheitsfaktor oder eine Dispergierbarkeit, ausgedrückt in Teilchenfeinheit nach DIN 53203 enthält dieser Prospekt nicht.

Aus dem Merkblatt "omyalite 90" (ohne Datum) der Plüss-Staufer AG, 4665 Oftringen, Schweiz, ist bereits ein mikrokristallines Calciumcarbonat mit einem mittleren Teilchendurchmesser von 1 μm und einem Anteil von 62 Gew.% an Teilchen im Bereich von 0,5 bis 1,8 μm Teilchendurchmesser bekannt. Dieses Merkblatt enthält keine Angaben über einen Steilheitsfaktor oder eine Dispergierbarkeit, ausgedrückt in Teilchenfeinheit nach DIN 53203.

Eine Aufgabe der vorliegenden Erfindung ist es, wesentliche anwendungstechnische Eigenschaften der carbonathaltigen mineralischen Füllstoffe, Pigmente und ähnlichen Materialien trotz unterschiedlicher Ein-

4

EP 0 246 406 B1

satzmöglichkeiten zu verbessern.

Diese Aufgabe wird erfindungsgemäß durch carbonathaltige mineralische Füllstoffe, Pigmente und ähnliche Materialien mit einem mittleren Teilchendurchmesser von 0,5 bis 2,5 $\mu$m und einem Anteil von 30 - 98 Gew.% an Teilchen im Bereich von 0,5 bis 1,8 $\mu$m Teilchendurchmesser gelöst, die dadurch gekennzeichnet sind, daß sie

a.) einen Steilheitsfaktor von 1,2 bis 2,1 und
b.) eine Dispergierbarkeit, ausgedrückt in Teilchenfeinheit nach DIN 53203 von 5 bis 25 $\mu$m
aufweisen.

Die in der vorstehend offenbarten Lösung der gestellten Aufgabe enthaltenen Fachausdrücke werden im folgenden unter Verwendung von der Fachwelt bekannten Begriffen und der Fachwelt ohne weiteres zugänglichen Literaturstellen definiert:

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5000 der Firma Micromeritics, U.S.A., bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.%igen, wäßrigen $Na_4P_2O_7$-Lösung. Die Dispergierung der Proben wurde mittels Schnellrührer und Ultraschall vorgenommen.

Die gemessene Teilchenverteilung wird auf einem X-Y-Schreiber als Durchgangs-Summenkurve dargestellt (siehe z.B. Belger, P., Schweizerische Vereinigung der Lack- und Farben-Chemiker, XVII. FATIPEC-Kongreß, Lugano, 23. bis 28. September 1984), wobei auf der X-Achse der Teilchendurchmesser eines entsprechenden sphärischen Durchmessers und auf der Y-Achse der Anteil an Teilchen in Gew% aufgetragen wird.

Die vier nachfolgend definierten Feinheitsmerkmale wurden aus den mit dem vorstehend beschriebenen Verfahren erhaltenen Kurven abgelesen bzw. errechnet.

1. Der <u>obere</u> <u>Schnitt</u> ist der Durchmesser der gröbsten Teilchen in $\mu$m der erfindungsgemäßen Produkte bzw. der Vergleichsprodukte, jeweils abgelesen aus der wie vorstehend beschrieben erhaltenen Kornverteilungskurve.

2. Der <u>mittlere</u> <u>Teilchendurchmesser</u> der erfindungsgemäßen Produkte bzw. der Vergleichsprodukte ist der Teilchendurchmesser in $\mu$m, abgelesen auf der X-Achse bei einem Wert auf der Y-Achse von 50 Gew.% der Teilchen.

3. Der <u>Anteil</u> <u>an</u> <u>Teilchen</u> <u>im</u> <u>Bereich</u> <u>von</u> <u>0,5</u> <u>bis</u> <u>1,8</u> $\mu$m errechnet sich wie folgt:
Der auf der Y-Achse bei einem Teilchendurchmesser von 1,8 $\mu$m abgelesene Wert in Gew.% minus dem auf der Y-Achse bei einem Teilchendurchmesser von 0,5 $\mu$m abgelesenen Wert in Gew.%.
Zu den drei vorstehenden Definitionen siehe auch Belger, P. Schweizerische Vereinigung der Lack- und Farben-Chemiker, XVII. FATIPEC-Kongress, Lugano, 23. bis 28. September 1984).

4. Der <u>Steilheitsfaktor</u> errechnet sich nach der Formel

$$\underline{\frac{Teilchendurchmesser\ in\ \mu m\ bei\ 50\ Gew.\%}{Teilchendurchmesser\ in\ \mu m\ bei\ 20\ Gew.\%}}\ ,$$

wobei die Teilchendurchmesser in $\mu$m jeweils wie vorstehend beschrieben abzulesen sind.

5. <u>Bestimmung</u> <u>der</u> <u>Dispergierbarkeit,</u> <u>ausgedrückt</u> <u>in</u> <u>Teilchenfeinheit</u> <u>nach</u> <u>DIN 53203</u>:

Die zu prüfenden Produkte werden in einer Pigment-Bindemittel-Mischung auf Basis eines langöligen Alkydharzes mit einem 75 %igen Ölgehalt, bestehend aus pflanzlichen Fettsäuren, z.B PLUSOL DL 75 der Firma Plüss-Staufer AG, CH-4665 Oftringen, Schweiz, das im Handel erhältlich ist und einem Titandioxid mit einem $TiO_2$-Gehalt von 94 %, z.B. KRONOS RN 59 der Firma KRONOS TITAN GmbH, Leverkusen, Bundesrepublik Deutschland, das im Handel erhältlich ist, auf Dispergierbarkeit geprüft.

Dazu wird die in Abhängigkeit der Zeit erzielte Kornfeinheit nach DIN 53203 bestimmt.

Die nachstehende Rezeptur wird zur Prüfung verwendet:

5

```
113,0 Gew.Teile    Alkydharz auf Ricinen-
                   Leinölbasis mit 75 %
                   Ölgehalt, 55 %-ige Lösung
                   in Testbenzin
100,0 Gew.Teile    Titandioxid mit einem TiO₂-
                   Gehalt von 94 %
100,0 Gew.Teile    zu prüfender Füllstoff
                   bzw. Pigment bzw. ähnliches
                   Material
                   ----------------
313,0 Gew.Teile
                   ================
```

Die in dieser Rezeptur genannten Produkte werden in ein Dispergiergefäß mit einem Innendurchmesser von 7,5 cm und einer Höhe von 6,5 cm eingewogen. Die Dispergierung erfolgt mittels schnell laufendem Rührwerk bei 3000 UPM unter Verwendung einer gezahnten Dissolver-Scheibe mit einem Durchmesser von 6,0 cm. Nach 8 Minuten Rührzeit wird die erzielte Teilchenfeinheit mittels Grindometer gemäß DIN 53203 ermittelt.

6. Bestimmung der Abrasionswerte mit dem Einlehner Abrasionstester AT 1000

Die Prüfung erfolgt mit dem Einlehner Abrasionstester AT 1000 (siehe Beschreibung von A. Breinig und W.F. Hill, Verein Zellcheming, Berliner Allee 56, D-6100 Darmstadt, Merkblatt V/27.5/75, ausgegeben am 23. Oktober 1975).

Verwendet wird der Drehkörper mit aufgezogenen PVC-Ringen. Als Prüfsieb wird das Standardprüfsieb aus Phosphorbronce gemäß oben genannter Beschreibung eingesetzt. Die Bestimmung der Abrasionswerte der einzelnen Produkte erfolgt in einer 10 Gew.%-igen, wäßrigen Suspension. Der Abrasionswert wird angegeben in mg Gewichtsverlust des Phosphorbroncesiebes nach 2 Stunden Prüfdauer.

Vorzugsweise liegt der Steilheitsfaktor in einem Bereich von 1,2 bis 2,0. Sehr gute Ergebnisse werden mit einem Steilheitsfaktor von 1,2 bis 1,9 erzielt. Ganz besonders gute Ergebnisse stellen sich bei einem Steilheitsfaktor von 1,2 bis 1,8 ein.

Vorzugsweise liegt der mittlere Teilchendurchmesser in einem Bereich von 0,5 bis 2,3 $\mu$m. Sehr gute Ergebnisse werden mit einem mittleren Teilchendurchmesser von 0,6 bis 2,1 $\mu$m erzielt. Bevorzugt werden innerhalb dieses Bereichs wiederum mittlere Teilchendurchmesser von 0,7 bis 2,0 $\mu$m, 0,7 bis 1,8 $\mu$m, 0,7 bis 1,6 $\mu$m und 0,7 bis 1,5 $\mu$m. Ganz hervorragende Ergebnisse werden mit einem mittleren Teilchendurchmesser von 0,9 bis 1,4 $\mu$m erzielt.

Vorzugsweise weisen die erfindungsgemäßen carbonathaltigen mineralischen Füllstoffe, Pigmente und ähnlichen Materialien einen Anteil von 40 bis 98 Gew.% an Teilchen im Bereich von 0,5 bis 1,8 $\mu$m Teilchendurchmesser auf. Sehr gute Ergebnisse werden bei einem Anteil von 50 bis 98 Gew.% und 60 bis 98 Gew.% erzielt. Ganz besonders gute Ergebnisse werden bei einem Anteil von 70 bis 98 Gew.% erreicht.

Vorzugsweise liegt die Dispergierbarkeit, ausgedrückt in Teilchenfeinheit nach DIN 53203 in einem Bereich von 5 bis 20 $\mu$m. Sehr gute Ergebnisse werden in einem Bereich von 5 bis 15 $\mu$m erzielt. Besonders gute Ergebnisse werden in einem Bereich von 5 bis 10 $\mu$m erzielt.

Vorzugsweise beträgt der obere Schnitt maximal 15 $\mu$m. Sehr gute Ergebnisse werden bei einem oberen Schnitt von maximal 12 $\mu$m erzielt. Noch bessere Ergebnisse werden bei einem oberen Schnitt von maximal 10 $\mu$m erhalten. Besonders gute Ergebnisse werden bei einem oberen Schnitt von maximal 8 $\mu$m erhalten. Optimal ist das Ergebnis bei einer Einhaltung eines oberen Schnitts von maximal 6 $\mu$m.

Vorzugsweise liegt der Abrasionswert, bestimmt mit dem Einlehner Abrasionstester AT 1000, bei maximal 10 mg. Gute Ergebnisse werden mit dem Abrasionswert von maximal 8 mg erreicht. Sehr gute Ergebniss werden mit einem Abrasionswert von maximal 6 mg erreicht. Besonders gute Ergebnisse werden mit einem Abrasionswert von maximal 4 mg erreicht. Optimale Ergebnisse werden mit einem Abrasionswert von maximal 2 mg erreicht.

Vorzugsweise bestehen die carbonathaltigen mineralischen Füllstoffe, Pigmente und ähnlichen Materialien aus Kreide und/oder Kalkstein und/oder Marmor und/oder dolomithaltigem Calciumcarbonat und/oder Dolomit oder aus natürlicher Kreide und/oder Kalkstein und/oder Marmor und/oder dolomithaltigem Calciumcarbonat und/oder Dolomit.

Das erfindungsgemäße Verfahren zur Herstellung der carbonathaltigen mineralischen Füllstoffe, Pigmente und ähnlichen Materialien ist dadurch gekennzeichnet, daß zunächst ein Ausgangsmaterial hergestellt wird, daß einen oberen Schnitt von 10 bis 50 $\mu$m und einen mittleren Teilchendurchmesser von 2 bis 10 $\mu$m aufweist. Hierzu wird zunächst eine Vorzerkleinerung des Rohmaterials, beispielsweise mittels Brecher und trockener Feinmahlung mittels Mühlen mit losen Mahlkörpern und/oder Walzmühlen und/oder Prallmühlen durchgeführt. Daraus werden z.B. mittels an sich bekannter Windsichtung die eigentlichen Ausgangsprodukte mit einem oberen Schnitt von 10 bis 50 $\mu$m und einem mittleren Durchmesser von 2 bis 10 $\mu$m hergestellt. Derartige Produkte können auch im Handel erhalten werden. Aus diesen Ausgangsmaterialien werden anschließend erfindungsgemäß durch Klassifizierung nach Teilchengröße mittels Windsichtung die Endprodukte hergestellt, die

a.) einen Steilheitsfaktor von 1,2 bis 2,1,

b.) einen mittleren Teilchendurchmesser von 0,5 bis 2,5 $\mu$m,

c.) einen Anteil von 30 bis 98 Gew.% an Teilchen im Bereich von 0,5 bis 1,8 $\mu$m Teilchendurchmesser und

d.) eine Dispergierbarkeit, ausgedrückt in Teilchenfeinheit nach DIN 53203 von 5 bis 25 $\mu$m

aufweisen.

Der in den folgenden Beispielen verwendete Labor-Multi-Plex-Zickzack-Sichter 100 MZR (ALPINE) kann vom Fachmann ohne weiteres durch einen großtechnischen Sichter ersetzt werden. Insbesondere ist das erfindungsgemäße Verfahren dadurch gekennzeichnet, daß ein Ausgangsmaterial mit einem oberen Schnitt von 10 bis 50 $\mu$m und einem mittleren Teilchendurchmesser von 2 bis 10 $\mu$m zunächst in an sich bekannter Weise trocken vermahlen und anschließend durch Klassifizierung nach Teilchengröße mittels Windsichtung mit einem Labor-Multi-Plex-Zickzack-Sichter 100 MZR (ALPINE) bei einer Drehzahl des Sichtrades von 5000 bis 20000 UpM und einer zugeführten Luftmenge von 20 bis 45 Normalkubikmeter pro Stunde derart aufbereitet wird, daß die resultierenden mineralischen Füllstoffe, Pigmente und ähnlichen Materialien

a.) einen Steilheitsfaktor von 1,2 bis 2,1,

b.) einen mittleren Teilchendurchmesser von 0,5 bis 2,5 $\mu$m,

c.) einen Anteil von 30 bis 98 Gew.% an Teilchen im Bereich von 0,5 bis 1,8 $\mu$m Teilchendurchmesser und

d.) eine Dispergierbarkeit, ausgedrückt in Teilchenfeinheit nach DIN 53203 von 5 bis 25 $\mu$m

aufweisen.

Weitere Aufgabenstellungen, Lösungsmerkmale und Vorteile der erfindungsgemäßen Erfindung ergeben sich aus der folgenden Beschreibung von Ausführungsbeispielen, Anwendungsbeispielen und Vergleichsbeispielen:

Herstellung der erfindungsgemäßen Versuchsprodukte:

Handelsübliche carbonathaltige mineralische Füllstoffe, Pigmente und ähnliche Materialien werden nach dem Stand der Technik folgendermaßen hergestellt:
Vorzerkleinerung des Rohmaterials beispielsweise mittels Brecher und trockene Feinmahlung mittels Mühlen mit losen Mahlkörpern und/oder Walzmühlen und/oder Prallmühlen.

Daraus werden mittels an sich bekannter Windsichtung handelsübliche Produkte mit einem oberen Schnitt von 10 bis 50 $\mu$m
und einem mittleren Teilchendurchmesser von 2 bis 10 $\mu$m hergestellt.

Solche handelsüblichen Produkte dienten als Ausgangsmaterial zur Herstellung der erfindungsgemäßen Versuchsprodukte:
An solchen Ausgangsmaterialien wird eine weitere Klassifizierung nach Teilchengröße mit einem Labor-Multi-Plex-Zickzack-Sichter 100 MZR (ALPINE) vorgenommen. Dabei können die Sichtbedingungen je nach gewünschter Endfeinheit folgendermaßen gewählt werden:
Die Drehzahl des Sichtrades kann 5000 bis 20000 UpM (Umdrehungen pro Minute), die zugeführte Luftmenge 20 bis 45 Normalkubikmeter pro Stunde betragen.

A) Ausführungsbeispiele:

Beispiel 1

Handelsüblicher Kalkstein mit einem oberen Schnitt von 10 $\mu$m und einem mittleren Teilchendurchmesser von 3 $\mu$m (siehe nachstehende Kornverteilungskurve; Abb. 1) wurde mit einem Labor-Multi-Plex-Zickzacksichter 100 MZR der Firma Alpine bei einer Sichtraddrehzahl von 18'000 UpM und einer Luftmenge von 32 Nm$^3$/h klassiert.

Abbildung 1:

oberer Schnitt = 10 µm (Mikron)

Teilchendurchmesser in Mikron

Feinheitsbestimmung: Sedigraph

mittlerer Teilchendurchmesser = 3 µm (Mikron)

An dem im Zyklon des Sichters als Feingut abgeschiedenen Versuchsprodukt wurden die nachfolgend beschriebenen Prüfungen vorgenommen.

1. Feinheitsmerkmale:

Die folgenden Feinheitsmerkmale des erfindungsgemäß hergestellten Produkts wurden durch Sedimentationsanalyse im Schwerefeld mit dem SEDIGRAPH 5000 der Firma Micromeritics, U.S.A., bestimmt.

Die Messung erfolgte in einer 0,1 Gew.%igen, wässrigen Na$_4$P$_2$O$_7$-Lösung. Die Dispergierung der Proben wurde mittels Schnellrührer und Ultraschall vorgenommen.

Die gemessene Teilchenverteilung wurde auf einem X-Y-Schreiber als Durchgangs-Summenkurve dargestellt, wobei auf der X-Achse der Teilchendurchmesser eines entsprechenden sphärischen Durchmessers und auf der Y-Achse der Anteil an Teilchen in Gew.% aufgetragen wurde (siehe Abbildung 2).

Die vier nachfolgend definierten Feinheitsmerkmale wurden aus der mit dem vorstehend beschriebenen Verfahren erhaltenen Kurve abgelesen bzw. errechnet.

a. Der obere Schnitt ist der Durchmesser der gröbsten Teilchen in $\mu$m des erfindungsgemäßen Produktes, abgelesen aus der wie vorstehend beschrieben erhaltenen Kornverteilungskurve.

Im vorliegenden Beispiel betrug der obere Schnitt 6 $\mu$m.

b. Der mittlere Teilchendurchmesser des erfindungsgemäßen Produktes ist der Teilchendurchmesser in $\mu$m, abgelesen auf der X-Achse bei einem Wert auf der Y-Achse von 50 Gew.% der Teilchen.

Im vorliegenden Beispiel betrug der mittlere Teilchendurchmesser 1,4 $\mu$m.

c. Der Anteil an Teilchen im Bereich von 0,5 - 1,8 $\mu$m errechnet sich wie folgt:

Der auf der Y-Achse bei einem Teilchendurchmesser von 1,8 $\mu$m abgelesene Wert in Gew.% minus dem auf der Y-Achse bei einem Teilchendurchmesser von 0,5 $\mu$m abgelesenen Wert in Gew.%.

Im vorliegenden Beispiel betrug der Anteil an Teilchen im Bereich von 0,5 - 1,8 $\mu$m Teilchendurchmesser 62 Gew.%.

d. Der Steilheitsfaktor errechnet sich nach der Formel

$$\frac{\text{Teilchendurchmesser in } \mu\text{m bei 50 Gew.\%}}{\text{Teilchendurchmesser in } \mu\text{m bei 20 Gew.\%}},$$

wobei die Teilchendurchmesser in $\mu$m jeweils wie vorstehend beschrieben abzulesen sind.

Im vorliegenden Beispiel betrug der Steilheitsfaktor

$$\frac{1,40 \ \mu\text{m bei 50 Gew.\%}}{0,78 \ \mu\text{m bei 20 Gew.\%}} = 1,8$$

2. Bestimmung der Dispergierbarkeit, ausgedrückt in Teilchenfeinheit nach DIN 53203:

Das zu prüfende Produkt wurde in einer Pigment-Bindemittel-Mischung auf Basis eines langöligen Alkydharzes mit einem 75%-igen Ölgehalt, bestehend aus pflanzlichen Fettsäuren, nämlich PLUSOL DL 75 der Firma Plüss-Staufer AG, CH-4665 Oftringen, Schweiz, das im Handel erhältlich ist und einem Titandioxid mit einem $TiO_2$-Gehalt von 94 %, nämlich KRONOS RN 59 der Firma KRONOS TITAN GmbH, Leverkusen, Bundesrepublik Deutschland, das im Handel erhältlich ist, auf Dispergierbarkeit geprüft. Dazu wurde die in Abhängigkeit der Zeit erzielte Kornfeinheit nach DIN 53203 bestimmt.

Die nachstehende Rezeptur wurde verwendet:

```
113,0 Gew.Teile    Alkydharz auf Ricinen-Leinölbasis
                   mit 75 % Ölgehalt, 55%-ige Lösung
                   in Testbenzin
100,0 Gew.Teile    Titandioxid mit einem TiO₂-Gehalt
                   von 94 %
100,0 Gew.Teile    Versuchsprodukt
─────────────────
313,0 Gew.Teile
═════════════════
```

Die in dieser Rezeptur genannten Produkte wurden in ein Dispergiergefäß mit einem Innendurchmesser von 7,5 cm und einer Höhe von 6,5 cm eingewogen. Die Dispergierung erfolgte mittels schnell laufendem Rührwerk bei 3000 UPM unter Verwendung einer gezahnten Dissolver-Scheibe mit einem Durchmesser von 6,0 cm. Nach 8 Minuten Rührzeit wurde die erzielte Teilchenfeinheit mittels Grindometer gemäß DIN 53203 ermittelt.

Im vorliegenden Beispiel betrug die Dispergierbarkeit 10 $\mu$m.

3. Bestimmung der Abrasionswerte mit dem Einlehner Abrasionstester AT 1000:

Die Prüfung erfolgte mit dem Einlehner Abrasionstester AT 1000 (siehe Beschreibung von A. Breinig und W.F. Hill, Verein Zellcheming, Berliner Allee 56, D-6100 Darmstadt, Merkblatt V/27.5/75, ausgegeben am 23. Oktober 1975).

Verwendet wurde der Drehkörper mit aufgezogenen PVC-Ringen. Als Prüfsieb wurde das Standardprüfsieb aus Phosphorbronce gemäß oben genannter Beschreibung eingesetzt. Die Bestimmung der Abrasionswerte der einzelnen Produkte erfolgte in einer 10 Gew.%igen, wässrigen Suspension. Der Abrasionswert wird angegeben in mg Gewichtsverlust des Phosphorbroncesiebes nach 2 Stunden Prüfdauer.

Im vorliegenden Beispiel betrug der Abrasionswert 4 mg.

Abbildung 2:

Beispiel 2

Ein handelsüblicher Dolomit mit einem oberen Schnitt von 30 $\mu$m und einem mittleren Teilchendurchmesser von 5.7 $\mu$m (siehe nachstehende Kornverteilungskurve) wurde mit dem in Beispiel 1 beschriebenen Sichter bei einer Sichtraddrehzahl von 7'000 UpM und einer Luftmenge von 43 Nm$^3$/h klassiert.

Abbildung 3:

Das im Zyklon als Feingut erhaltene Versuchsprodukt wurde gemäß Beispiel 1 geprüft und wies einen Steilheitsfaktor von 2,1,
einen mittleren Teilchendurchmesser von 2,5 $\mu$m, einen Anteil an Teilchen im Bereich von 0,5 - 1, 8 $\mu$m Teilchendurchmesser von 30 Gew.%
und eine Dispergierbarkeit von 25 $\mu$m auf.
Der obere Schnitt betrug 15 $\mu$m.
Der Abrasionswert betrug 10 mg.

Beispiel 3

Ein handelsübliches dolomithaltiges Calciumcarbonat Typ Marmor mit einem oberen Schnitt von 12 $\mu$m und einem mittleren Teilchendurchmesser von 2,7$\mu$m wurde mit dem in Beispiel 1 beschriebenen Sichter bei einer Sichtraddrehzahl von 20'000 UpM und einer Luftmenge von 30 Nm$^3$/h klassiert.

Abbildung 4:

Das im Zyklon als Feingut erhaltene Versuchsprodukt wurde gemäß Beispiel 1 geprüft und wies einen Steilheitsfaktor von 1,6,
einen mittleren Teilchendurchmesser von 0,5 $\mu$m,
einen Anteil an Teilchen im Bereich von 0,5 - 1,8 $\mu$m Teilchendurchmesser von 49 Gew.%
und eine Dispergierbarkeit von 6 $\mu$m auf.
Der obere Schnitt betrug 2 $\mu$m.
Der Abrasionswert betrug 3 mg.

Beispiel 4

Handelsübliche natürliche Kreide mit einem oberen Schnitt von 25 $\mu$m und einem mittleren Teilchen-durchmesser von 2,5 $\mu$m wurde mit dem in Beispiel 1 beschriebenen Sichter bei der maximalen Sichtraddrehzahl von 20'000 UpM und einer Luftmenge von 25 Nm$^3$/h klassiert.

11

Abbildung 5:

Das im Zyklon als Feingut erhaltene Versuchsprodukt wurde gemäß Beispiel 1 geprüft und wies einen Steilheitsfaktor von 1,2,

einen mittleren Teilchendurchmesser von 0,72 $\mu$m,

einen Anteil an Teilchen im Bereich von 0,5 - 1,8 $\mu$m

Teilchendurchmesser von 98 Gew.%

und eine Dispergierbarkeit von 5 $\mu$m auf.

Der obere Schnitt betrug 3 $\mu$m.

Der Abrasionswert betrug 1 mg.

B) Anwendungsbeispiele:

Beispiel 5

Eine handelsübliche natürliche Kreide mit der im Beispiel 4 beschriebenen Feinheit wurde mit dem in Beispiel 1 beschriebenen Sichter so klassiert, daß die in der nachstehenden Tabelle aufgeführten Produkte C - F entstanden.

Die Produkte A und B sind Handelsprodukte und entsprechen dem heutigen Stand der Technik.

Die Produkte wurden bezüglich Opazität (gemäß DIN 53146 Prüfung von Papier und Pappe "Bestimmung der Opazität") in einer Papiermasse geprüft.

Die Papierblattherstellung erfolgte nach der folgenden

Rezeptur:

```
80    Gew.% Birkesulfatzellstoff  ⎫ Faserstoff mit einem
                                   ⎬ Mahlgrad von 25°
20    Gew.% Kiefersulfatzellstoff ⎭ Schopper-Riegler

 0,06 Gew.% hochmolekulares Polyacrylamid = Retentions-
                                             mittel
```

Füllstoffanteil:

20 Gew.% bezogen auf Papiermasse

Flächengewicht: (Papier + Füllstoff, bestimmt nach DIN 53104 Blatt 1)

75 g/m$^2$

Bestimmung der Opazität:

Die Opazität = ein Maß für die Lichtdurchlässigkeit von Papier, wurde mittels eines lichtelektrischen Remissionsphotometers Typ Elrephomat gemäß DIN 53146 (Ausgabe März 1979) bestimmt.

Ergebnisse:

Tabelle 1

| Produkt | Steilheitsfaktor | mittlerer Teilchendurchmesser | Anteil Teilchen im Bereich von 0,5 - 1,8 $\mu$m | Dispergierbarkeit | Oberer Schnitt | Opazität |
|---|---|---|---|---|---|---|
| A | 2,5 | 1,6 $\mu$m | 40 Gew.% | 20 $\mu$m | 16 $\mu$m | 87,9 % |
| B | 2,2 | 0,6 $\mu$m | 51 Gew.% | 30 $\mu$m | 3 $\mu$m | 87,4 % |
| C | 1,6 | 1,7 $\mu$m | 52 Gew.% | 10 $\mu$m | 8 $\mu$m | 88,3 % |
| D | 1,6 | 1,5 $\mu$m | 62 Gew.% | 10 $\mu$m | 8 $\mu$m | 88,7 % |
| E | 1,5 | 1,4 $\mu$m | 72 Gew.% | 10 $\mu$m | 8 $\mu$m | 89,4 % |
| F | 1,4 | 1,0 $\mu$m | 88 Gew.% | 8 $\mu$m | 6 $\mu$m | 90,2 % |

Die erfindungsgemäßen Produkte C - F zeichnen sich im Vergleich zum Stand der Technik (Produkte A und B) bei unterschiedlichem Steilheitsfaktor und mittlerem Teilchendurchmesser mit steigendem Anteil an Teilchen im Bereich von 0,5 - 1,8 $\mu$m durch wesentlich bessere Dispergierbarkeit und höhere, mit abnehmendem mittleren Teilchendurchmesser = feiner werdenden Produkten, noch stark zunehmende Opazität aus.

Beispiel 6

Aus einem handelsüblichen Kalkstein mit der im Beispiel 1 beschriebenen Feinheit wurden mit dem in Beispiel 1 beschriebenen Sichter sechs Produkte (B - G) analog dem Beispiel 5 hergestellt und geprüft. Produkt A entspricht dem Stand der Technik.

Ergebnisse:

Tabelle 2

| Produkt | Steilheitsfaktor | mittlerer Teilchendurchmesser | Anteil Teilchen im Bereich von 0,5 - 1,8 μm | Dispergierbarkeit | Abrasionswerte | Oberer Schnitt | Opazität |
|---|---|---|---|---|---|---|---|
| A | 2,5 | 2,5 μm | 29 Gew.% | 25 μm | 12 mg | 15 μm | 84,6 % |
| B | 1,8 | 2,3 μm | 31 Gew.% | 10 μm | 8 mg | 8 μm | 85,7 % |
| C | 1,7 | 2,0 μm | 40 Gew.% | 10 μm | 6 mg | 6 μm | 86,1 % |
| D | 1,7 | 1,8 μm | 50 Gew.% | 8 μm | 5 mg | 6 μm | 86,7 % |
| E | 1,8 | 1,4 μm | 62 Gew.% | 8 μm | 4 mg | 6 μm | 87,6 % |
| F | 1,7 | 1,2 μm | 73 Gew.% | 7 μm | 3 mg | 5 μm | 88,0 % |
| G | 1,9 | 0,7 μm | 70 Gew.% | 5 μm | 2 mg | 3 μm | 88,1 % |

Die dem Patentanspruch entsprechenden Produkte B - G zeigen im Vergleich zu Produkt A einen dem heutigen Stand der Technik entsprechenden Füllstoff, aufgrund ihrer wesentlich besseren Verteilung (Dispergierung in der Papiermasse, deutlich höhere Opazitätswerte.

C) Vergleichsbeispiele:

Beispiel 7

Ein handelsüblicher Kalkstein mit der in Beispiel 1 beschriebenen Feinheit wurde mit dem in Beispiel 1 beschriebenen Sichter bei einer Sichtraddrehzahl von 20'000 UpM und einer Luftmenge von 20 Nm³/h klassiert.

In einer Fugendichtungsmasse auf Basis eines Polysulfid-Polymers wurde das erfindungsgemäße Produkt B mit einem in Anwesenheit von Dispergiermittel naßvermahlenen und anschließend getrockneten Handelsprodukt (Produkt A) auf das Viskositätsverhalten geprüft.

Rezeptur:

| | |
|---|---|
| Polysulfid-Polymer (Thiokol LP-32, Thiokol Corp. Trenton, N.J.) | 35 Gew.Teile |
| Chlorparaffin 52 (Höchst AG, Frankfurt) | 35 Gew.Teile |
| Füllstoff | 30 Gew.Teile |

Versuchsbedingungen:

Die Dispergierung der Fugendichtungsmassen erfolgte mittels Dissolver bei Raumtemperatur während 2 Minuten. Die Viskositätsmessung wurde mit einem Rheomat 135 bei 20°C gemäß DIN 125 durchgeführt.

Ergebnisse:

## Tabelle 3:

| Produkt | Steil-heits-faktor | mTd | Anteil 0.5 - 1.8 um | Disper-gierbar-keit | Oberer Schnitt | Viskosität in Pa.s bei Schergeschwindigkeiten ($S^{-1}$) | | | | | |
|---|---|---|---|---|---|---|---|---|---|---|---|
| | | | | | | 1 | 2.5 | 5 | 10 | 25 | 50 |
| A | > 2,7 | 0,54 µm | 48 Gew.% | 35 µm | 3 µm | 161 | 103 | 77 | 59 | 47 | 41 |
| B | 1,9 | 0,7 µm | 70 Gew.% | 5 µm | 3 µm | 311 | 168 | 113 | 79 | 53 | 43 |

Die Viskositätsmessung zeigt, daß das erfindungsgemäße Produkt B im Vergleich zum Stand der Technik (Produkt A) bei niedriger Schergeschwindigkeit praktisch eine Verdoppelung der Viskosität in Pa.s ergibt. Dieses Viskositätsverhalten (Thixotropie) ist bei diesem Einsatzgebiet erwünscht und stellt damit einen bemerkenswerten technischen Fortschritt dar.

Beispiel 8

Ein handelsüblicher Kalkstein mit der im Beispiel 1 beschriebenen Feinheit wurde mit dem in Beispiel 1 beschriebenen Sichter bei einer Sichtraddrehzahl von 19'500 UpM und einer Luftmenge von 30 Nm³/h klassiert.

Dieser Füllstoff (Produkt B) wurde in Hart-PVC mit einem dem heutigen Stand der Technik entsprechenden Handelsprodukt (Produkt A) verglichen.

Das in Anwesenheit von Dispergiermitteln naßvermahlene und anschließend getrocknete Produkt A wurde zur Verbesserung der Dispergierbarkeit mit 0,8 % Stearinsäure oberflächenbehandelt.

Geprüft wurde die Kerbschlagzähigkeit, eine Prüfung, die für den Durchschnittsfachmann als sehr sensitive Bestimmung der Dispergierung von Füllstoffen in Hart-PVC gilt.

Rezeptur:

```
S-PVC mit K-Wert 65              100,0 Gew.Teile
Blei-Sulfat (dreibasisch)          1,5   "
Blei-Stearat                       1,3   "
Calcium-Stearat                    0,6   "
E-Wachs (Höchst AG, Frankfurt)     0,05  "
Füllstoff                         15,0   "
```

Versuchsbedingungen:

Das PVC und alle Stabilisatoren und Gleitmittel wurden in einem Papenmeier Schnellmischer von 14 Liter Inhalt eingefüllt. Die Einfüllmenge betrug 7 kg. Aus dem kalten Zustand wurde die Mischung durch Friktionswärme und Wärme, die über den Doppelmantel zugeführt wurde, mit 1800 UpM auf 100°C erhitzt und während 5 Minuten bei 100 - 105°C gehalten. Die Drehzahl des Mischers wurde anschließend auf 600 UpM reduziert und die Mischung auf 50°C abgekühlt (Kaltwasser im Doppelmantel zirkulieren lassen). Der Füllstoff wurde bei 450 UpM zugegeben und während 1 Minute homogenisiert. Anschließend wurde der Mischer entleert.

Preßplattenherstellung:

Vom Dry Blend wurden 300 g abgewogen und auf dem Zweiwalzenwerk mit 150 mm $\emptyset$ und 400 mm Länge bei 185°C während 5 Minuten unter dauerndem Wenden geliert.

Nach diesen 5 Minuten wird das Fell (2 - 4 mm Dicke) von der Walze genommen und in einem Rahmen auf die gewünschte Stärke gepreßt. Dazu wird das Material bei 190°C 2 Minuten bei 10 kN vorgepreßt und anschließend 3 Minuten bei 200 kN belastet. Dann wird die Platte unter eine zweite bei 20°C mit Wasser gekühlte Presse gegeben, bei einem Druck von 10 kN.

Ergebnisse:

Tabelle 4

| Produkt | Steilheitsfaktor | mittlerer Teilchendurchm. | Anteil 0,5 -1,8 $\mu$m | Dispergierbarkeit | Oberer Schnitt | Kerbschlagzähigkeit nach DIN 53 453 |
|---|---|---|---|---|---|---|
| A | 3,6 | 1,00 | 60 Gew.% | 30 $\mu$m | 4 $\mu$m | 7,5 ± 0,4 mJ/mm$^2$ |
| B | 1,7 | 1,20 | 73 Gew.% | 7 $\mu$m | 5 $\mu$m | 8,1 ± 0,5 mJ/mm$^2$ |

Mit dem erfindungsgemäßen Produkt B wurden dank besserer Dispergierbarkeit etwas höhere Kerbschlagzähigkeitswerte erreicht als mit dem, dem heutigen Stand der Technik entsprechenden Produkt A, das zur Verbesserung der Dispergiereigenschaften noch oberflächenbehandelt werden mußte.

Beispiel 9

Ein handelsüblicher Marmor mit der in Beispiel 3 beschriebenen Feinheit wurde mit dem in Beispiel 1 beschriebenen Sichter bei einer Sichtraddrehzahl von 19'500 UpM und einer Luftmenge von 30 Nm$^3$/h klassiert.

Der entstandene erfindungsgemäße Füllstoff (Produkt B) wurde mit einem Handelsprodukt vergleichbarer Feinheit, das dem heutigen Stand der Technik entspricht, in einer hochgefüllten Innendispersionsfarbe geprüft.

Rezeptur:

```
293 Gew.Teile      Wasser
  1 "               Konservierungsmittel auf Basis
                    chloriertes Säureamid/Fluorid
  3 "               Dispergiermittel auf Basis Polyacrylat
 19 "               Netzmittel auf Basis von Polyphosphat
                    mittlerer Kettenlänge, 10%ig in Wasser
  1 "               Entschäumer
 50 "              .Talkum
320 "               Calciumcarbonat mit 5 µm mittlerem
                    Teilchendurchmesser
125 "               Füllstoff (Produkt A resp. B)
 60 "               Titandioxid Rutil
  4 "               Verdickungsmittel (Methylcellulose)
  1 "               Ammoniak, 25%ig
  3 "               Butyldiglykolacetat
 15 "               Lackbenzin
105 "               Dispersionsbindemittel, ca. 50%ig auf
                    Basis Druckpolymerisat aus Vinylacetat,
                    Vinylchlorid, Aetylen
```

Die Herstellung der Farben erfolgte mittels Dissolver. 72 h nach Herstellung der Farben erfolgte die Applikation mittels Filmziehgerät (23,8 mm/sec.) mit einem Aufziehbalken mit 150 µm Spaltbreite auf Kontrastkarten.

Die Weißgrad- und Deckvermögensmessung wurde mit einem Spektralphotometer gemäß DIN 53 140 (C/2°) durchgeführt.

Ergebnisse:

## Tabelle 5:

| Produkt | Steil-heits-faktor | mittl. Teil-chend. | Anteil an 0,5 -1,8 um | Disper-gier-barkeit | Oberer Schnitt | Weissgrad | | | | Gelb-wert | Deck-ver-mögen |
|---------|------|------|------|------|------|------|------|------|------|------|------|
| | | | | | | Rx | Ry weiss | Ry schwarz | Rz | | |
| B | 1,6 | 1,0 | 75 Gew.% | 14 μm | 8 μm | 90,4 | 90,1 | 87,2 | 87,2 | 3,6 | 96,8 % |
| A | 2,8 | 0,8 | 52 Gew.% | 30 μm | 5 μm | 90,4 | 90,1 | 86,7 | 87,5 | 3,2 | 96,2 % |

Das erfindungsgemäße Produkt B ergibt trotz größerem mittleren Teilchendurchmesser gegenüber dem Stand der Technik (Produkt A) bei gleichem Weißgrad ein höheres Deckvermögen.

Die Erfindung weist insbesondere folgende Vorteile auf:

Mit den erfindungsgemäßen Produkten konnten weitere wesentliche Eigenschaften in den verschiedenen Anwendungsbereichen verbessert werden:

- Bei Farben und Lacken insbesondere das Deckvermögen und der Glanz.
- In der Papierindustrie für die Papiermasse eine höhere Opazität, bessere Retentionswerte (da die erfindungsgemäßen Produkte ohne Dispergiermittelzusatz hergestellt wurden) und eine geringere Abrasivität.
- Im Papierstrich einen besseren Glanz, höhere Opazität und bessere Bedruckbarkeit.
- In der Kunststoffindustrie wird eine bessere Rheologie in Plastisolen und Dichtungsmassen sowie eine Erhöhung der mechanischen Eigenschaften, z. B. in Hart-PVC erreicht.

Außerdem stellen die erfindungsgemäßen Produkte ein günstigeres Ausgangsmaterial für die nachträgliche Oberflächenbehandlung dar (Haftung).

Aus den vorstehend näher definierten Begriff "Dispergiermittel" und "Retentionsmittel (Flockungsmittel)" ergibt sich, daß die Dispergierbarkeit der Füllstoffe in der Papiermasse auch in Bezug auf die Retention ein wichtiges Kriterium ist. Daraus geht auch hervor, daß Retentionsmittel zugesetzt werden, um eine gute Bindung des Füllstoffs bzw. des Pigments bzw. ähnlicher Materialien mit der Faser zu erreichen.

Andererseits ergibt sich daraus, daß Dispergiermittel erforderlich sind, um die Agglomeration von Füllstoffteilchen zu verhindern. Die genannten Dispergiermittel sind jedoch genau das Gegenteil der Retentionsmittel, was erklärt, weshalb die in Gegenwart von Dispergiermitteln durch Naßvermahlung hergestellten Füllstoffe unbefriedigende Retentionswerte ergeben. Der wesentliche Vorteil der erfindungsgemäßen Füllstoffe bzw. Pigmente bzw. ähnlichen Materialien liegt deshalb auch darin, daß diese ohne Dispergiermittel hergestellt werden können und sich trotzdem durch eine hervorragende Dispergierbarkeit auszeichnen.

Nach alledem ist es außerordentlich überraschend, daß die erfindungsgemäßen Produkte alle aufgeführten Eigenschaften verbessern, da die Forderungen bezüglich der Feinheit für Glanz, Opazität, Abrasion und Dispergierbarkeit sich zum Teil mit den Forderungen für Retention und Haftung widersprechen.

**Patentansprüche**

**Patentansprüche für folgende Vertragsstaaten : BE, CH, DE, FR, GB, IT, LI, NL, SE**

1. Carbonathaltige mineralische Füllstoffe, Pigmente und ähnliche Materialien mit einem mittleren Teilchendurchmesser von 0,5 bis 2,5 μm und einem Anteil von 30 - 98 Gew.% an Teilchen im Bereich von 0,5 bis 1,8 μm Teilchendurchmesser,
dadurch gekennzeichnet
daß sie
a.) einen Steilheitsfaktor von 1,2 bis 2,1 und
b.) eine Dispergierbarkeit, ausgedrückt in Teilchenfeinheit nach DIN 53203 von 5 bis 25 μm
aufweisen.

18

**2.** Carbonathaltige mineralische Füllstoffe, Pigmente und ähnliche Materialien nach Anspruch 1,
dadurch gekennzeichnet,
daß sie einen Steilheitsfaktor von 1,2 bis 2,0 oder von 1,2 bis 1,9 oder von 1,2 bis 1,8 aufweisen.

**3.** Carbonathaltige mineralische Füllstoffe, Pigmente und ähnliche Materialien nach einem oder mehreren
der vorhergehenden Ansprüche,
dadurch gekennzeichnet,
daß sie einen mittleren Teilchendurchmesser von 0,5 bis 2,3 $\mu$m oder 0,6 bis 2,1 $\mu$m oder 0,7 bis 2,0
$\mu$m oder 0,7 bis 1,8 $\mu$m oder 0,7 bis 1,6 $\mu$m oder 0,7 bis 1,5 $\mu$m oder 0,9 bis 1,4 $\mu$m aufweisen.

**4.** Carbonathaltige mineralische Füllstoffe, Pigmente und ähnliche Materialien nach einem oder mehreren
der vorhergehenden Ansprüche,
dadurch gekennzeichnet,
daß sie einen Anteil von 40 bis 98 Gew.% an Teilchen im Bereich von 0,5 bis 1,8 $\mu$m Teilchendurchmesser oder daß sie einen Anteil von 50 bis 98 Gew.% an Teilchen im Bereich von 0,5 bis 1,8 $\mu$m
Teilchendurchmesser oder daß sie einen Anteil von 60 bis 98 Gew.% an Teilchen im Bereich von 0,5
bis 1,8 $\mu$m Teilchendurchmesser oder daß sie einen Anteil von 70 bis 98 Gew.% an Teilchen im
Bereich von 0,5 bis 1,8 $\mu$m Teilchendurchmesser aufweisen.

**5.** Carbonathaltige mineralische Füllstoffe, Pigmente und ähnliche Materialien nach einem oder mehreren
der vorhergehenden Ansprüche,
dadurch gekennzeichnet,
daß sie eine Dispergierbarkeit von 5 bis 20 $\mu$m oder daß sie eine Dispergierbarkeit von 5 bis 15 $\mu$m
oder daß sie eine Dispergierbarkeit von 5 bis 10 $\mu$m aufweisen.

**6.** Carbonathaltige mineralische Füllstoffe, Pigmente und ähnliche Materialien nach einem oder mehreren
der vorhergehenden Ansprüche,
dadurch gekennzeichnet,
daß sie einen oberen Schnitt von maximal 15 $\mu$m oder daß sie einen oberen Schnitt von maximal 12
$\mu$m oder daß sie einen oberen Schnitt von maximal 10 $\mu$m oder daß sie einen oberen Schnitt von
maximal 8 $\mu$m oder daß sie einen oberen Schnitt von maximal 6 $\mu$m aufweisen.

**7.** Carbonathaltige mineralische Füllstoffe, Pigmente und ähnliche Materialien nach einem oder mehreren
der vorhergehenden Ansprüche,
dadurch gekennzeichnet,
daß sie einen Abrasionswert von maximal 10 mg oder daß sie einen Abrasionswert von maximal 8 mg
oder daß sie einen Abrasionswert von maximal 6 mg oder daß sie einen Abrasionswert von maximal 4
mg oder daß sie einen Abrasionswert von maximal 2 mg aufweisen.

**8.** Carbonathaltige mineralische Füllstoffe, Pigmente und ähnliche Materialien nach einem oder mehreren
der vorhergehenden Ansprüche,
dadurch gekennzeichnet,
daß sie aus Kreide und/oder Kalkstein und/oder Marmor und/oder dolomithaltigem Calciumcarbonat
und/oder Dolomit bestehen.

**9.** Carbonathaltige mineralische Füllstoffe, Pigmente und ähnliche Materialien nach Anspruch 8,
dadurch gekennzeichnet,
daß diese aus natürlicher Kreide und/oder Kalkstein und/oder Marmor und/oder dolomithaltigem
Calciumcarbonat und/oder Dolomit bestehen.

**10.** Verfahren zur Herstellung der carbonathaltigen mineralischen Füllstoffe, Pigmente und ähnlichen
Materialien nach einem der Ansprüche 1 bis 9,
dadurch gekennzeichnet,
daß ein Ausgangsmaterial mit einem oberen Schnitt von 10 bis 50 $\mu$m und einem mittleren Teilchendurchmesser von 2 bis 10 $\mu$m zunächst in an sich bekannter Weise trocken vermahlen und/oder
anschließend durch Klassifizierung nach Teilchengröße mittels Windsichtung aufbereitet wird.

**11.** Verfahren zur Herstellung der carbonathaltigen mineralischen Füllstoffe, Pigmente und ähnlichen Materialien nach einem der Ansprüche 1 bis 10,
dadurch gekennzeichnet,
daß ein Ausgangsmaterial mit einem oberen Schnitt von 10 bis 50 $\mu$m und einem mittleren Teilchendurchmesser von 2 bis 10 $\mu$m zunächst in an sich bekannter Weise trocken vermahlen und/oder anschließend durch Klassifizierung nach Teilchengröße mittels Windsichtung derart aufbereitet wird, daß die resultierenden mineralischen Füllstoffe, Pigmente und ähnlichen Materialien
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen.

**12.** Verfahren zur Herstellung der carbonathaltigen mineralischen Füllstoffe, Pigmente und ähnlichen Materialien nach einem der Ansprüche 1 bis 10,
dadurch gekennzeichnet,
daß ein Ausgangsmaterial mit einem oberen Schnitt von 10 bis 15 $\mu$m und einem mittleren Teilchendurchmesser von 2 bis 10 $\mu$m zunächst in an sich bekannter Weise trocken vermahlen und/oder anschließend durch Klassifizierung nach Teilchengröße mittels Windsichtung mit einem Labor-Multi-Plex-Zickzack-Sichter 100 MZR (ALPINE) bei einer Drehzahl des Sichtrades von 5000 bis 20000 UpM und einer zugeführten Luftmenge von 20 bis 45 Normalkubikmeter pro Stunde derart aufbereitet wird, daß die resultierenden mineralischen Füllstoffe, Pigmente und ähnlichen Materialien
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen.

**13.** Verwendung von carbonathaltigen mineralischen Füllstoffen, Pigmenten und ähnlichen Materialien, die durch Trockenvermahlung und Klassifizierung nach Teilchengröße aufbereitet sind und
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen in Farben und Lacken, in Papieren und in Kunststoffen.

**14.** Verwendung der carbonathaltigen, mineralischen Füllstoffe, Pigmente und ähnlichen Materialien nach einem der Ansprüche 1 bis 13
in Plastisolen und Dichtungsmassen.

**15.** Verwendung der carbonathaltigen, mineralischen Füllstoffe, Pigmente und ähnlichen Materialien nach einem der Ansprüche 1 bis 13
in der Papiermasse.

**16.** Verwendung der carbonathaltigen, mineralischen Füllstoffe, Pigmente und ähnlichen Materialien nach einem der Ansprüche 1 bis 13
im Papierstrich.

**Patentansprüche für folgende Vertragsstaaten : AT, ES**

**1.** Verfahren zur Herstellung von carbonathaltigen mineralischen Füllstoffen, Pigmenten und ähnlichen Materialien,
dadurch gekennzeichnet,
daß das Ausgangsmaterial zunächst in an sich bekannter Weise vermahlen und/oder anschließend durch Klassifizierung nach Teilchengröße derart aufbereitet wird, daß sie

a.) einen Steilheitsfaktor von 1,2 bis 2,1,

b.) einen mittleren Teilchendurchmesser von 0,5 bis 2,5 $\mu$m,

c.) einen Anteil von 30 bis 98 Gew.% an Teilchen im Bereich von 0,5 bis 1,8 $\mu$m Teilchendurchmesser und

d.) eine Dispergierbarkeit, ausgedrückt in Teilchenfeinheit nach DIN 53203 von 5 bis 25 $\mu$m aufweisen.

2. Verfahren nach Anspruch 1,
dadurch gekennzeichnet,
daß die carbonathaltigen, mineralischen Füllstoffe, Pigmente und ähnlichen Materialien einen Steilheitsfaktor von 1,2 bis 2,0 oder von 1,2 bis 1,9 oder von 1,2 bis 1,8 aufweisen.

3. Verfahren nach einem oder mehreren der vorhergehenden Ansprüche,
dadurch gekennzeichnet,
daß die carbonathaltigen, mineralischen Füllstoffe, Pigmente und ähnlichen Materialien einen mittleren Teilchendurchmesser von 0,5 bis 2,3 $\mu$m oder 0,6 bis 2,1 $\mu$m oder 0,7 bis 2,0 $\mu$m oder 0,7 bis 1,8 $\mu$m oder 0,7 bis 1,6 $\mu$m oder 0,7 bis 1,5 $\mu$m oder 0,9 bis 1,4 $\mu$m aufweisen.

4. Verfahren nach einem oder mehreren der vorhergehenden Ansprüche,
dadurch gekennzeichnet,
daß die carbonathaltigen, mineralischen Füllstoffe, Pigmente und ähnlichen Materialien einen Anteil von 40 bis 98 Gew.% an Teilchen im Bereich von 0,5 bis 1,8 $\mu$m Teilchendurchmesser oder daß sie einen Anteil von 50 bis 98 Gew.% an Teilchen im Bereich von 0,5 bis 1,8 $\mu$m Teilchendurchmesser oder daß sie einen Anteil von 60 bis 98 Gew.% an Teilchen im Bereich von 0,5 bis 1,8 $\mu$m Teilchendurchmesser oder daß sie einen Anteil von 70 bis 98 Gew.% an Teilchen im Bereich von 0,5 bis 1,8 $\mu$m Teilchendurchmesser aufweisen.

5. Verfahren nach einem oder mehreren der vorhergehenden Ansprüche,
dadurch gekennzeichnet,
daß die carbonathaltigen, mineralischen Füllstoffe, Pigmente und ähnlichen Materialien eine Dispergierbarkeit von 5 bis 20 $\mu$m oder daß sie eine Dispergierbarkeit von 5 bis 15 $\mu$m oder daß sie eine Dispergierbarkeit von 5 bis 10 $\mu$m aufweisen.

6. Verfahren nach einem oder mehreren der vorhergehenden Ansprüche,
dadurch gekennzeichnet,
daß die carbonathaltigen, mineralischen Füllstoffe, Pigmente und ähnlichen Materialien einen oberen Schnitt von maximal 15 $\mu$m oder daß sie einen oberen Schnitt von maximal 12 $\mu$m oder daß sie einen oberen Schnitt von maximal 10 $\mu$m oder daß sie einen oberen Schnitt von maximal 8 $\mu$m oder daß sie einen oberen Schnitt von maximal 6 $\mu$m aufweisen.

7. Verfahren nach einem oder mehreren der vorhergehenden Ansprüche,
dadurch gekennzeichnet,
daß die carbonathaltigen, mineralischen Füllstoffe, Pigmente und ähnlichen Materialien einen Abrasionswert von maximal 10 mg oder daß sie einen Abrasionswert von maximal 8 mg oder daß sie einen Abrasionswert von maximal 6 mg oder daß sie einen Abrasionswert von maximal 4 mg oder daß sie einen Abrasionswert von maximal 2 mg aufweisen.

8. Verfahren nach einem oder mehreren der vorhergehenden Ansprüche,
dadurch gekennzeichnet,
daß die carbonathaltigen, mineralischen Füllstoffe, Pigmente und ähnlichen Materialien aus Kreide und/oder Kalkstein und/oder Marmor und/oder dolomithaltigem Calciumcarbonat und/oder Dolomit bestehen.

9. Verfahren nach einem oder mehreren der vorhergehenden Ansprüche,
dadurch gekennzeichnet,
daß die carbonathaltigen, mineralischen Füllstoffe, Pigmente und ähnlichen Materialien aus natürlicher Kreide und/oder Kalkstein und/oder Marmor und/oder dolomithaltigem Calciumcarbonat und/oder Dolomit bestehen.

**10.** Verfahren zur Herstellung der carbonathaltigen mineralischen Füllstoffe, Pigmente und ähnlichen Materialien nach einem der Ansprüche 1 bis 9,
dadurch gekennzeichnet,
daß ein Ausgangsmaterial mit einem oberen Schnitt von 10 bis 50 $\mu$m und einem mittleren Teilchendurchmesser von 2 bis 10 $\mu$m zunächst in an sich bekannter Weise trocken vermahlen und/oder anschließend durch Klassifizierung nach Teilchengröße mittels Windsichtung aufbereitet wird.

**11.** Verfahren zur Herstellung der carbonathaltigen mineralischen Füllstoffe, Pigmente und ähnlichen Materialien nach einem der Ansprüche 1 bis 10,
dadurch gekennzeichnet,
daß ein Ausgangsmaterial mit einem oberen Schnitt von 10 bis 50 $\mu$m und einem mittleren Teilchendurchmesser von 2 bis 10 $\mu$m zunächst in an sich bekannter Weise trocken vermahlen und/oder anschließend durch Klassifizierung nach Teilchengröße mittels Windsichtung derart aufbereitet wird, daß die resultierenden mineralischen Füllstoffe, Pigmente und ähnlichen Materialien
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen.

**12.** Verfahren zur Herstellung der carbonathaltigen mineralischen Füllstoffe, Pigmente und ähnlichen Materialien nach einem der Ansprüche 1 bis 10,
dadurch gekennzeichnet,
daß ein Ausgangsmaterial mit einem oberen Schnitt von 10 bis 15 $\mu$m und einem mittleren Teilchendurchmesser von 2 bis 10 $\mu$m zunächst in an sich bekannter Weise trocken vermahlen und/oder anschließend durch Klassifizierung nach Teilchengröße mittels Windsichtung mit einem Labor-Multi-Plex-Zickzack-Sichter 100 MZR (ALPINE) bei einer Drehzahl des Sichtrades von 5000 bis 20000 UpM und einer zugeführten Luftmenge von 20 bis 45 Normalkubikmeter pro Stunde derart aufbereitet wird, daß die resultierenden mineralischen Füllstoffe, Pigmente und ähnlichen Materialien
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen.

**13.** Verwendung von carbonathaltigen mineralischen Füllstoffen, Pigmenten und ähnlichen Materialien, die durch Trockenvermahlung und Klassifizierung nach Teilchengröße aufbereitet sind und
    a.) einen Steilheitsfaktor von 1,2 bis 2,1,
    b.) einen mittleren Teilchendurchmesser von 0,5 bis 2,5 $\mu$m,
    c.) einen Anteil von 30 bis 98 Gew.% an Teilchen im Bereich von 0,5 bis 1,8 $\mu$m Teilchendurchmesser und
    d.) eine Dispergierbarkeit, ausgedrückt in Teilchenfeinheit nach DIN 53203 von 5 bis 25 $\mu$m
aufweisen in Farben und Lacken, in Papieren und in Kunststoffen.

**14.** Verwendung der carbonathaltigen, mineralischen Füllstoffe, Pigmente und ähnlichen Materialien nach einem der Ansprüche 1 bis 13
in Plastisolen und Dichtungsmassen.

**15.** Verwendung der carbonathaltigen, mineralischen Füllstoffe, Pigmente und ähnlichen Materialien nach einem der Ansprüche 1 bis 13
in der Papiermasse.

**16.** Verwendung der carbonathaltigen, mineralischen Füllstoffe, Pigmente und ähnlichen Materialien nach einem der Ansprüche 1 bis 13
im Papierstrich.

**Claims**

**Claims for the following Contracting States : BE, CH, DE, FR, GB, IT, LI, NL, SE**

1. Carbonate-containing mineral fillers, pigments and similar materials, having a mean particle diameter of 0.5 to 2.5 $\mu$m and a fraction of 30 to 98 % by weight of particles in the particle diameter range of 0.5 to 1.8 $\mu$m
   characterized in that they have
   a) a contrast factor of 1.2 to 2.1 and
   b) a dispersibility, expressed in particle fineness according to DIN 53203, of 5 to 25 $\mu$m.

2. Carbonate-containing mineral fillers, pigments and similar materials as in claim 1, characterized in that they have a contrast factor of 1.2 to 2.0 or 1.2 to 1.9 or 1.2 to 1.8.

3. Carbonate-containing mineral fillers, pigments or similar materials as in one or more of the foregoing claims,
   characterized in that they have a mean particle diameter of 0.5 to 2.3 $\mu$m or 0.6 to 2.1 $\mu$m or 0.7 to 2.0 $\mu$m or 0.7 to 1.8 $\mu$m or 0.7 to 1.6 $\mu$m or 0.7 to 1.5 $\mu$m or 0.9 to 1.4 $\mu$m.

4. Carbonate-containing mineral fillers, pigments or similar materials as in one or more of the foregoing claims,
   characterized in that they have a fraction of from 40 to 98 % by weight of particles in the particle diameter range from 0.5 to 1.8 $\mu$m or that they have a fraction of from 50 to 98 % by weight of particles in the particle diameter range from 0.5 to 1.8 $\mu$m or that they have a fraction of from 60 to 98 % by weight of particles in the particle diameter range from 0.5 to 1.8 $\mu$m or that they have a fraction of from 70 to 98 % by weight of particles in the particle diameter range from 0.5 to 1.8 $\mu$m.

5. Carbonate-containing mineral fillers, pigments or similar materials as in one or more of the foregoing claims,
   characterized in that they have a dispersibility of from 5 to 20 $\mu$m or that they have a dispersibility of from 5 to 15 $\mu$m or that they have a dispersibility of from 5 to 10 $\mu$m.

6. Carbonate-containing mineral fillers, pigments or similar materials as in one or more of the foregoing claims,
   characterized in that they have an upper section of a maximum of 15 $\mu$m or that they have an upper section of a maximum of 12 $\mu$m or that they have an upper section of a maximum of 10 $\mu$m or that they have an upper section of a maximum of 8 $\mu$m or that they have an upper section of a maximum of 6 $\mu$m.

7. Carbonate-containing mineral fillers, pigments or similar materials as in one or more of the foregoing claims,
   characterized in that they have an abrasion value of a maximum of 10 mg or that they have an abrasion vlaue of a maximum of 8 mg or that they have an abrasion value of a maximum of 6 mg or that they have an abrasion value of a maximum of 4 mg or that they have an abrasion value of a maximum of 2 mg.

8. Carbonate-containing mineral fillers, pigments or similar materials as in one or more of the foregoing claims,
   characterized in that they are composed of chalk and/or limestone and/or marble and/or dolomite-containing calcium carbonate and/or dolomite.

9. Carbonate-containing mineral fillers, pigments or similar materials as in claim 8,
   characterized in that they are composed of natural chalk and/or limestone and/or marble and/or dolomite-containing calcium carbonate and/or dolomite.

10. Method for the preparation of carbonate-containing mineral fillers, pigments and similar materials as in any one of claims 1 to 9,
    characterized in that an initial material with an upper section of 10 to 50 $\mu$m and a mean particle diameter of 2 to 10 $\mu$m is first dry ground in a known manner and/or then treated by grading by particle size by wind screening.

**11.** Method of preparing the carbonate-containing mineral fillers, pigments and similar materials as in any one of claims 1 to 10,

characterized in that an initial material with an upper section of 10 to 50 $\mu$m and a mean particle diameter of 2 to 10 $\mu$m is first dry ground in a known manner and/or then treated by grading by particle size by wind screening so that the resultant mineral fillers, pigments and similar materials have

    a) a contrast factor of 1.2 to 2.1,

    b) a mean particle diameter of 0.5 to 2.5 $\mu$m,

    c) a fraction of 30 to 98 % by weight of particles in the particle-size range from 0.5 to 1.8 $\mu$m and

    d) a dispersibility, expressed in particle fineness in accordance with DIN 53203 of 5 to 25 $\mu$m.

**12.** Method of preparing the carbonate-containing mineral fillers, pigments and similar materials as in any one of claims 1 to 10,

characterized in that an initial material with an upper section of 10 to 15 $\mu$m and a mean particle diameter of 2 to 10 $\mu$m is first dry ground in a known manner and/or then treated by grading by particle size by wind screening with a laboratory Multi-Plex 100 MZR zigzag screener (ALPINE) at a separation wheel speed of 5000 to 20.000 rpm and with the introduction of a quantity of air of 20 to 45 standard cubic metres per hour so that the resultant mineral fillers, pigments and similar materials have

    a) a contrast factor of 1.2 to 2.1,

    b) a mean particle diameter of 0.5 to 2.5 $\mu$m,

    c) a fraction of 30 to 98 % by weight of particles in the particle-diameter range from 0.5 to 1.8 $\mu$m and

    d) a dispersibility, expressed in particle fineness in accordance with DIN 53203 of 5 to 25 $\mu$m.

**13.** Use of carbonate-containing mineral fillers, pigments and similar materials which are prepared by dry grinding and grading by particle size and have

    a) a contrast factor of 1.2 to 2.1,

    b) a mean particle diameter of 0.5 to 2.5 $\mu$m,

    c) a fraction of from 30 to 98 % by weight of particles in the particle-diameter range from 0.5 to 1.8 $\mu$m and

    d) a dispersibility, expressed in particle fineness in accordance with DIN 53203 of 5 to 25 $\mu$m

in dyes and paints, in papers and in plastics.

**14.** Use of the carbonate-containing mineral fillers, pigments and similar substances as in any one of claims 1 to 13 in plastisols and sealing compounds.

**15.** Use of the carbonate-containing mineral filers, pigments and similar materials as in any one of claims 1 to 13 in paper pulp.

**16.** Use of the carbonate-containing mineral fillers, pigments and similar materials as in any one of claims 1 to 13 in a paper coating.

**Claims for the following Contracting States : AT, ES**

**1.** A method of preparing carbonate-containing mineral fillers, pigments and similar materials, characterized in that

the starting material is first ground in a manner known per se and/or is then treated by grading by particle size so that the resultant mineral fillers, pigments and similar materials have

    a) a contrast factor of 1.2 to 2.1,

    b) a mean particle diameter of 0.5 to 2.5 $\mu$m,

    c) a fraction of 30 to 98 % by weight of particles in the particle diameter range 0.5 to 1.8 $\mu$m and

    d) a dispersibility, expressed in particle fineness according to DIN 53203, of 5 to 25 $\mu$m.

**2.** A method according to claim 1, characterized in that

the carbonate-containing mineral fillers, pigments and similar materials have a contrast factor of 1.2 to 2.0 or 1.2 to 1.9 or 1.2 to 1.8.

3. A method according to one or more of the preceding claims,
characterized in that
the carbonate-containing mineral fillers, pigments or similar materials have a mean particle diameter of 0.5 to 2.3 $\mu$m or 0.6 to 2.1 $\mu$m or 0.7 to 2.0 $\mu$m or 0.7 to 1.8 $\mu$m or 0.7 to 1.6 $\mu$m or 0.7 to 1.5 $\mu$m or 0.9 to 1.4 $\mu$m.

4. A method according to one or more of the preceding claims,
characterized in that
the carbonate-containing mineral fillers, pigments or similar materials have a fraction of from 40 to 98 % by weight of particles in the particle diameter range from 0.5 to 1.8 $\mu$m or that they have a fraction of from 50 to 98 % by weight of particles in the particle diameter range from 0.5 to 1.8 $\mu$m or that they have a fraction of from 60 to 98 % by weight of particles in the particle diameter range from 0.5 to 1.8 $\mu$m or that they have a fraction of from 70 to 98 % by weight of particles in the particle diameter range from 0.5 to 1.8 $\mu$m.

5. A method according to one or more of the preceding claims,
characterized in that
the carbonate-containing mineral fillers, pigments or similar materials have a dispersibility of from 5 to 20 $\mu$m or that they have a dispersibility of from 5 to 15 $\mu$m or that they have a dispersibility of from 5 to 10 $\mu$m.

6. A method according to one or more of the preceding claims,
characterized in that
the carbonate-containing mineral fillers, pigments or similar materials have an upper section of a maximum of 15 $\mu$m or that they have an upper section of a maximum of 12 $\mu$m or that they have an upper section of a maximum of 10 $\mu$m or that they have an upper section of a maximum of 8 $\mu$m or that they have an upper section of a maximum of 6 $\mu$m.

7. A method according to one or more of the preceding claims,
characterized in that
the carbonate-containing mineral fillers, pigments or similar materials have an abrasion value of a maximum of 10 mg or that they have an abrasion vlaue of a maximum of 8 mg or that they have an abrasion value of a maximum of 6 mg or that they have an abrasion value of a maximum of 4 mg or that they have an abrasion value of a maximum of 2 mg.

8. A method according to one or more of the preceding claims,
characterized in that
the carbonate-containing mineral fillers, pigments or similar materials are composed of chalk and/or limestone and/or marble and/or dolomite-containing calcium carbonate and/or dolomite.

9. A method according to one or more of the preceding claims,
characterized in that
the carbonate-containing mineral fillers, pigments or similar materials are composed of natural chalk and/or limestone and/or marble and/or dolomite-containing calcium carbonate and/or dolomite.

10. A method of preparing carbonate-containing mineral fillers, pigments and similar materials as in any one of claims 1 to 9,
characterized in that an initial material with an upper section of 10 to 50 $\mu$m and a mean particle diameter of 2 to 10 $\mu$m is first dry ground in a known manner and/or then treated by grading by particle size by wind screening.

11. A method of preparing the carbonate-containing mineral fillers, pigments and similar materials as in any one of claims 1 to 10,
characterized in that an initial material with an upper section of 10 to 50 $\mu$m and a mean particle diameter of 2 to 10 $\mu$m is first dry ground in a known manner and/or then treated by grading by particle size by wind screening so that the resultant mineral fillers, pigments and similar materials have
    a) a contrast factor of 1.2 to 2.1,
    b) a mean particle diameter of 0.5 to 2.5 $\mu$m,

25

c) a fraction of 30 to 98 % by weight of particles in the particle-size range from 0.5 to 1.8 $\mu$m and

d) a dispersibility, expressed in particle fineness in accordance with DIN 53203 of 5 to 25 $\mu$m.

**12.** A method of preparing the carbonate-containing mineral fillers, pigments and similar materials as in any one of claims 1 to 10,

characterized in that an initial material with an upper section of 10 to 15 $\mu$m and a mean particle diameter of 2 to 10 $\mu$m is first dry ground in a known manner and/or then treated by grading by particle size by wind screening with a laboratory Multi-Plex 100 MZR zigzag screener (ALPINE) at a separation wheel speed of 5000 to 20.000 rpm and with the introduction of a quantity of air of 20 to 45 standard cubic metres per hour so that the resultant mineral fillers, pigments and similar materials have

a) a contrast factor of 1.2 to 2.1,

b) a mean particle diameter of 0.5 to 2.5 $\mu$m,

c) a fraction of 30 to 98 % by weight of particles in the particle-diameter range from 0.5 to 1.8 $\mu$m and

d) a dispersibility, expressed in particle fineness in accordance with DIN 53203 of 5 to 25 $\mu$m.

**13.** Use of carbonate-containing mineral fillers, pigments and similar materials which are prepared by dry grinding and grading by particle size and have

a) a contrast factor of 1.2 to 2.1,

b) a mean particle diameter of 0.5 to 2.5 $\mu$m,

c) a fraction of from 30 to 98 % by weight of particles in the particle-diameter range from 0.5 to 1.8 $\mu$m and

d) a dispersibility, expressed in particle fineness in accordance with DIN 53203 of 5 to 25 $\mu$m

in dyes and paints, in papers and in plastics.

**14.** Use of the carbonate-containing mineral fillers, pigments and similar substances as in any one of claims 1 to 13 in plastisols and sealing compounds.

**15.** Use of the carbonate-containing mineral filers, pigments and similar materials as in any one of claims 1 to 13 in paper pulp.

**16.** Use of the carbonate-containing mineral fillers, pigments and similar materials as in any one of claims 1 to 13 in a paper coating.

**Revendications**

**Revendications pour les Etats contractants suivants : BE, CH, DE, FR, GB, IT, LI, NL, SE**

**1.** Matières de charge, pigments et matériaux minéraux similaires contenant du carbonate, avec un diamètre moyen des particules de 0,5 à 2,5 $\mu$m et une proportion de 30 à 98 % en poids de particules dans la plage de diamètre de 0,5 à 1,8 $\mu$m, caractérisés en ce qu'ils présentent

a) un facteur de pente de 1,2 à 2,1 et

b) un facteur de dispersion de 5 à 25 $\mu$m exprimé en finesse des particules selon la DIN 53203.

**2.** Matières de charge, pigments et matériaux minéraux similaires contenant du carbonate selon la revendication 1, caractérisés en ce qu'ils présentent un facteur de pente de 1,2 à 2,0, ou de 1,2 à 1,9, ou de 1,2 à 1,8.

**3.** Matières de charge, pigments et matériaux minéraux similaires contenant du carbonate selon l'une ou plusieurs des revendications précédentes, caractérisés en ce qu'ils présentent un diamètre moyen des particules de 0,5 à 2,3 $\mu$m, ou de 0,6 à 2,1 $\mu$m, ou de 0,7 à 2,0 $\mu$m, ou de 0,7 à 1,8 $\mu$m, ou de 0,7 à 1,6 $\mu$m, ou de 0,7 à 1,5 $\mu$m, ou de 0,9 à 1,4 $\mu$m.

**4.** Matières de charge, pigments et matériaux minéraux similaires contenant du carbonate selon l'une ou plusieurs des revendications précédentes, caractérisés en ce qu'ils présentent une proportion de 40 à 98 % en poids de particules dans la plage de diamètre de 0,5 à 1,8 $\mu$m, ou une proportion de 50 à 98 % en poids de particules dans la plage de diamètre de 0,5 à 1,8 $\mu$m, ou une proportion de 60 à 98 % en poids de particules dans la plage de diamètre de 0,5 à 1,8 $\mu$m, ou une proportion de 70 à 98 % en poids de particules dans la plage de diamètre de 0,5 à 1,8 $\mu$m.

26

5. Matières de charge, pigments et matériaux minéraux similaires contenant du carbonate selon l'une ou plusieurs des revendications précédentes, caractérisés en ce qu'ils présentent un facteur de dispersion de 5 à 20 $\mu$m, ou un facteur de dispersion de 5 à 15 $\mu$m, ou un facteur de dispersion de 5 à 10 $\mu$m.

6. Matières de charge, pigments et matériaux minéraux similaires contenant du carbonate selon l'une ou plusieurs des revendications précédentes, caractérisés en ce qu'ils présentent une section supérieure maximale de 15 $\mu$m, ou une section supérieure maximale de 12 $\mu$m, ou une section supérieure maximale de 10 $\mu$m, ou une section supérieure maximale de 8 $\mu$m, ou une section supérieure maximale de 6 $\mu$m.

7. Matières de charge, pigments et matériaux minéraux similaires contenant du carbonate selon l'une ou plusieurs des revendications précédentes, caractérisés en ce qu'ils présentent un indice d'abrasion maximal de 10 mg, ou un indice d'abrasion maximal de 8 mg, ou un indice d'abrasion maximal de 6 mg, ou un indice d'abrasion maximal de 4 mg, ou un indice d'abrasion maximal de 2 mg.

8. Matières de charge, pigments et matériaux minéraux similaires contenant du carbonate selon l'une ou plusieurs des revendications précédentes, caractérisés en ce qu'ils sont composés de craie et/ou de calcaire et/ou de marbre et/ou de carbonate de calcium contenant de la dolomite et/ou de dolomite.

9. Matières de charge, pigments et matériaux minéraux similaires contenant du carbonate selon la revendication 8, caractérisés en ce qu'ils sont composés de craie et/ou de calcaire et/ou de marbre et/ou de carbonate de calcium contenant de la dolomite et/ou de dolomite, naturels.

10. Procédé pour la fabrication des matières de charge, pigments et matériaux minéraux similaires contenant du carbonate selon l'une quelconque des revendications 1 à 9, caractérisé en ce qu'un matériau de départ d'une section supérieure de 10 à 50 $\mu$m et d'un diamètre moyen des particules de 2 à 10 $\mu$m est d'abord moulu à sec de la manière connue, et/ou en ce qu'il est ensuite traité par classification selon la taille des particules au moyen d'un criblage pneumatique.

11. Procédé pour la fabrication des matières de charge, pigments et matériaux minéraux similaires contenant du carbonate selon l'une quelconque des revendications 1 à 10, caractérisé en ce qu'un matériau de départ d'une section supérieure de 10 à 50 $\mu$m et d'un diamètre moyen des particules de 2 à 10 $\mu$m est d'abord moulu à sec de la manière connue, et/ou en ce qu'il est ensuite traité par classification selon la taille des particules au moyen d'un criblage pneumatique, de telle sorte que les matières de charge, pigments et matériaux minéraux similaires obtenus présentent
    a) un facteur de pente de 1,2 à 2,1,
    b) un diamètre moyen des particules de 0,5 à 2,5 $\mu$m,
    c) une proportion de 30 à 98 % en poids de particules dans la plage de diamètre de 0,5 à 1,8 $\mu$m, et
    d) un facteur de dispersion de 5 à 25 $\mu$m exprimé en finesse des particules selon la DIN 53203.

12. Procédé pour la fabrication des matières de charge, des pigments et des matériaux minéraux similaires contenant du carbonate selon l'une quelconque des revendications 1 à 10, caractérisé en ce qu'un matériau de départ d'une section supérieure de 10 à 15 $\mu$m et d'un diamètre moyen des particules de 2 à 10 $\mu$m est d'abord moulu à sec de la manière connue, et/ou en ce qu'il est ensuite traité par classification selon la taille des particules au moyen d'un criblage pneumatique avec un cribleur en zigzag multiplex de laboratoire 100 MZR (ALPINE) à une vitesse de rotation de la roue de criblage de 5.000 à 20.000 t/min et un apport de quantité d'air de 20 à 45 mètres cubes par heure dans les conditions normales, de telle sorte que les matières de charge, pigments et matériaux minéraux similaires obtenus présentent
    a) un facteur de pente de 1,2 à 2,1,
    b) un diamètre moyen des particules de 0,5 à 2,5 $\mu$m,
    c) une proportion de 30 à 98 % en poids de particules dans la plage de diamètre de 0,5 à 1,8 $\mu$m, et
    d) un facteur de dispersion de 5 à 25 $\mu$m exprimé en finesse des particules selon la DIN 53203.

13. Utilisation de matières de charge, de pigments et de matériaux minéraux similaires contenant du carbonate, qui sont traités par une mouture à sec et une classification selon la taille des particules, et qui présentent

    a) un facteur de pente de 1,2 à 2,1,

    b) un diamètre moyen des particules de 0,5 à 2,5 $\mu$m,

    c) une proportion de 30 à 98 % en poids de particules dans la plage de diamètre de 0,5 à 1,8 $\mu$m, et

    d) un facteur de dispersion de 5 à 25 $\mu$m exprimé en finesse des particules selon la DIN 53203

dans des peintures et des laques, dans des papiers et dans des matières synthétiques.

**14.** Utilisation des matières de charge, des pigments et des matériaux minéraux similaires contenant du carbonate selon l'une quelconque des revendications 1 à 13 dans des plastisols et des masses d'étanchéification.

**15.** Utilisation des matières de charge, des pigments et des matériaux minéraux similaires contenant du carbonate selon l'une quelconque des revendications 1 à 13 dans la pâte à papier.

**16.** Utilisation des matières de charge, des pigments et des matériaux minéraux similaires contenant du carbonate selon l'une quelconque des revendications 1 à 13 dans le couchage du papier.

**Revendications pour les Etats contractants suivants : AT, ES**

**1.** Procédé pour la fabrication de matières de charge, pigments et matériaux minéraux similaires contenant du carbonate, caractérisé en ce que le matériau de départ est d'abord moulu à sec de la manière connue, et/ou en ce qu'il est ensuite traité par classification selon la taille des particules, de telle sorte qu'ils présentent

    a) un facteur de pente de 1,2 à 2,1,

    b) un diamètre moyen des particules de 0,5 à 2,5 $\mu$m,

    c) une proportion de 30 à 98 % en poids de particules dans la plage de diamètre de 0,5 à 1,8 $\mu$m, et

    d) un facteur de dispersion de 5 à 25 $\mu$m exprimé en finesse des particules selon la DIN 53203.

**2.** Procédé selon la revendication 1, caractérisé en ce que les matières de charge, pigments et matériaux minéraux similaires contenant du carbonate présentent un facteur de pente de 1,2 à 2,0, ou de 1,2 à 1,9, ou de 1,2 à 1,8.

**3.** Procédé selon l'une ou plusieurs des revendications précédentes, caractérisé en ce que les matières de charge, pigments et matériaux minéraux similaires contenant du carbonate présentent un diamètre moyen des particules de 0,5 à 2,3 $\mu$m, ou de 0,6 à 2,1 $\mu$m, ou de 0,7 à 2,0 $\mu$m, ou de 0,7 à 1,8 $\mu$m, ou de 0,7 à 1,6 $\mu$m, ou de 0,7 à 1,5 $\mu$m, ou de 0,9 à 1,4 $\mu$m.

**4.** Procédé selon l'une ou plusieurs des revendications précédentes, caractérisé en ce que les matières de charge, pigments et matériaux minéraux similaires contenant du carbonate présentent une proportion de 40 à 98 % en poids de particules dans la plage diamètre de 0,5 à 1,8 $\mu$m, ou une proportion de 50 à 98 % en poids de particules dans la plage de diamètre de 0,5 à 1,8 $\mu$m, ou une proportion de 60 à 98 % en poids de particules dans la plage de diamètre de 0,5 à 1,8 $\mu$m, ou une proportion de 70 à 98 % en poids de particules dans la plage de diamètre de 0,5 à 1,8 $\mu$m.

**5.** Procédé selon l'une ou plusieurs des revendications précédentes, caractérisé en ce que les matières de charge, pigments et matériaux minéraux similaires contenant du carbonate présentent un facteur de dispersion de 5 à 20 $\mu$m, ou un facteur de dispersion de 5 à 15 $\mu$m, ou un facteur de dispersion de 5 à 10 $\mu$m.

**6.** Procédé selon l'une ou plusieurs des revendications précédentes, caractérisé en ce que les matières de charge, pigments et matériaux minéraux similaires contenant du carbonate présentent une section supérieure maximale de 15 $\mu$m, ou une section supérieure maximale de 12 $\mu$m, ou une section supérieure maximale de 10 $\mu$m, ou une section supérieure maximale de 8 $\mu$m, ou une section supérieure maximale de 6 $\mu$m.

**7.** Procédé selon l'une ou plusieurs des revendications précédentes, caractérisé en ce que les matières de charge, pigments et matériaux minéraux similaires contenant du carbonate présentent un indice d'abrasion maximal de 10 mg, ou un indice d'abrasion maximal 8 mg, ou un indice d'abrasion maximal de 6 mg, ou un indice d'abrasion maximal de 4 mg, ou un indice d'abrasion de maximal 2 mg.

**8.** Procédé selon l'une ou plusieurs des revendications précédentes, caractérisé en ce que les matières de charge, pigments et matériaux minéraux similaires contenant du carbonate sont composés de craie et/ou de calcaire et/ou de marbre et/ou de carbonate de calcium contenant de la dolomite et/ou de dolomite.

**9.** Procédé selon l'une ou plusieurs des revendications précédentes, caractérisé en ce que les matières de charge, pigments et matériaux minéraux similaires contenant du carbonate sont composés de craie et/ou de calcaire et/ou de marbre et/ou de carbonate de calcium contenant de la dolomite et/ou de dolomite, naturels.

**10.** Procédé pour la fabrication des matières de charge, pigments et matériaux minéraux similaires contenant du carbonate selon l'une quelconque des revendications 1 à 9, caractérisé en ce qu'un matériau de départ d'une section supérieure de 10 à 50 μm et d'un diamètre moyen des particules de 2 à 10 μm est d'abord moulu à sec de la manière connue, et/ou en ce qu'il est ensuite traité par classification selon la taille des particules au moyen d'un criblage pneumatique.

**11.** Procédé pour la fabrication des matières de charge, pigments et matériaux minéraux similaires contenant du carbonate selon l'une quelconque des revendications 1 à 10, caractérisé en ce qu'un matériau de départ d'une section supérieure de 10 à 50 μm et d'un diamètre moyen des particules de 2 à 10 μm est d'abord moulu à sec de la manière connue, et/ou en ce qu'il est ensuite traité par classification selon la taille des particules au moyen d'un criblage pneumatique, de telle sorte que les matières de charge, pigments et matériaux minéraux similaires obtenus présentent
    a) un facteur de pente de 1,2 à 2,1,
    b) un diamètre moyen des particules de 0,5 à 2,5 μm,
    c) une proportion de 30 à 98 % en poids de particules dans la plage de diamètre de 0,5 à 1,8 μm, et
    d) un facteur de dispersion de 5 à 25 μm exprimé en finesse des particules selon la DIN 53203.

**12.** Procédé pour la fabrication des matières de charge, pigments et matériaux minéraux similaires contenant du carbonate selon l'une quelconque des revendications 1 à 10, caractérisé en ce qu'un matériau de départ d'une section supérieure de 10 à 15 μm et d'un diamètre moyen des particules de 2 à 10 μm est d'abord moulu à sec de la manière connue, et/ou en ce qu'il est ensuite traité par classification selon la taille des particules au moyen d'un criblage pneumatique avec un cribleur en zigzag multiplex de laboratoire 100 MZR (ALPINE) à une vitesse de rotation de la roue de criblage de 5.000 à 20.000 t/min et un apport de quantité d'air de 20 à 45 mètres cubes par heure dans les conditions normales, de telle sorte que les matières de charge, pigments et matériaux minéraux similaires obtenus présentent
    a) un facteur de pente de 1,2 à 2,1,
    b) un diamètre moyen des particules de 0,5 à 2,5 μm,
    c) une proportion de 30 à 98 % en poids de particules dans la plage de diamètre de 0,5 à 1,8 μm, et
    d) un facteur de dispersion de 5 à 25 μm exprimé en finesse des particules selon la DIN 53203.

**13.** Utilisation de matières de charge, pigments et matériaux minéraux similaires contenant du carbonate, qui sont traités par une mouture à sec et une classification selon la taille des particules, et qui présentent
    a) un facteur de pente de 1,2 à 2,1,
    b) un diamètre moyen des particules de 0,5 à 2,5 μm,
    c) une proportion de 30 à 98 % en poids de particules dans la plage de diamètre de 0,5 à 1,8 μm, et
    d) un facteur de dispersion de 5 à 25 μm exprimé en finesse des particules selon la DIN 53203
dans des peintures et des laques, dans des papiers et dans des matières synthétiques.

**14.** Utilisation des matières de charge, des pigments et des matériaux minéraux similaires contenant du carbonate selon l'une quelconque des revendications 1 à 13 dans des plastisols et des masses d'étanchéification.

**15.** Utilisation des matières de charge, des pigments et des matériaux minéraux similaires contenant du carbonate selon l'une quelconque des revendications 1 à 13 dans la pâte à papier.

**16.** Utilisation des matières de charge, des pigments et des matériaux minéraux similaires contenant du carbonate selon l'une quelconque des revendications 1 à 13 dans le couchage du papier.